(19) Europäisches Patentamt
European Patent Office
Office européen des brevets

(11) **EP 3 231 056 B1**

(12) **EUROPEAN PATENT SPECIFICATION**

(45) Date of publication and mention
of the grant of the patent:
**13.03.2019 Bulletin 2019/11**

(51) Int Cl.:
*H02J 5/00* (2016.01)      *H02J 7/02* (2016.01)
*H02J 50/10* (2016.01)      *H02J 50/60* (2016.01)

(21) Application number: **15804815.7**

(22) Date of filing: **04.12.2015**

(86) International application number:
**PCT/EP2015/078726**

(87) International publication number:
**WO 2016/091764 (16.06.2016 Gazette 2016/24)**

(54) **WIRELESS INDUCTIVE POWER TRANSFER**

DRAHTLOSE INDUKTIVE LEISTUNGSÜBERTRAGUNG

TRANSFERT INDUCTIF D'ÉNERGIE SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2014 EP 14197352**

(43) Date of publication of application:
**18.10.2017 Bulletin 2017/42**

(73) Proprietor: **Koninklijke Philips N.V.**
**5656 AE Eindhoven (NL)**

(72) Inventor: **VAN WAGENINGEN, Andries**
**5656 AE Eindhoven (NL)**

(74) Representative: **Coops, Peter**
**Philips Intellectual Property & Standards**
**High Tech Campus 5**
**5656 AE Eindhoven (NL)**

(56) References cited:
**WO-A1-2014/060871      WO-A1-2014/060871**

**Description**

FIELD OF THE INVENTION

The invention relates to inductive power transfer and in particular, but not exclusively, to an inductive power transfer system in accordance with the Qi wireless power transfer standard.

BACKGROUND OF THE INVENTION

Wireless power transfer, such as e.g. for wireless powering or charging of portable devices, are receiving increasing interest and is becoming increasingly widespread.

A potential problem with wireless power transfer is that power may unintentionally be transferred to e.g. metallic objects. For example, if a foreign object, such as e.g. a coin, key, ring etc., is placed upon a power transmitter platform arranged to receive a power receiver for wireless power transfer, the magnetic flux generated by the transmitter coil will introduce eddy currents in the metal objects which will cause the objects to heat up. The heat increase may be very significant and may indeed result in a risk of pain and damage to humans subsequently picking up the objects.

In order to prevent such scenarios, it has been proposed to introduce foreign object detection where the power transmitter can detect the presence of a foreign object and reduce the transmit power and/or generate a user alert when a positive detection occurs. For example, the Qi system includes functionality for detecting a foreign object, and for reducing power if a foreign object is detected.

The power dissipation in a foreign object can be estimated from the difference between transmitted and received power. In order to prevent that too much power is dissipated in a foreign object, the transmitter can terminate the power transfer if the power loss exceeds a threshold.

In the Qi power transfer Specification, the power receiver estimates its received power e.g. by measuring the rectified voltage and current, multiplying them and adding an estimate of the internal power losses in the power receiver (e.g. losses of the rectifier, the receive coil, metal parts being part of the receiver etc.). The power receiver reports the determined received power to the power transmitter with a minimum rate of e.g. every four seconds.

The power transmitter estimates its transmitted power, e.g. by measuring the DC input voltage and current of the inverter, multiplying them and correcting the result by subtracting an estimation of the internal power losses in the transmitter, such as e.g. estimated power loss in the inverter, the primary coil and metal parts that are part of the power transmitter.

The power transmitter can estimate the power loss by subtracting the reported received power from the transmitted power. If the difference exceeds a threshold, the transmitter will assume that too much power is dissipated in a foreign object and it can then proceed to terminate the power transfer.

Specifically, the power transfer is terminated when the estimated power loss PT - PR is larger than a threshold where PT is the estimated transmitted power and PR is the estimated received power.

When performing this power loss detection, it is important that the power loss is determined with sufficient accuracy. Firstly, it must be ensured that a foreign object which absorbs significant power from the magnetic field is detected. In order to ensure this, any error in estimating the power loss calculated from the transmitted and received power must be less than the acceptable level for power absorption in a foreign object. Similarly, in order to avoid false detections, the accuracy of the power loss calculation must be sufficiently accurate to not result in estimated power loss values that are too high when no foreign object is present.

It is substantially more difficult to determine the transmitted and received power estimates sufficiently accurately at higher power levels than for lower power levels. For example, assuming that an uncertainty of the estimates of the transmitted and received power is $\pm 3\%$, this can lead to an error of

$\pm 150$mW at 5W transmitted and received power, and

$\pm 1.5$W at 50W transmitted and received power.

Thus, whereas such accuracy may be acceptable for a low power transfer operation it is not acceptable for a high power transfer operation.

Typically, it is required that the power transmitter must be able to detect power consumption of foreign objects of only 350 mW or even lower. This requires very accurate estimation of the received power and the transmitted power. This is particularly difficult at high power levels, and frequently it is difficult for power receivers to generate estimates that are sufficiently accurate. However, if the power receiver overestimates the received power, this can result in power consumption by foreign objects not being detected.

Conversely, if the power receiver underestimates the received power, this may lead to false detections where the power transmitter terminates the power transfer despite no foreign objects being present.

In order to obtain the desired accuracy, it has been proposed that the power transmitter and power receiver are calibrated to each other before power transfer at least at higher levels is performed. WO 2014/060871 A1 describes a wireless power transfer system in which the power transmitter and power receiver jointly perform a power loss calibration comprising all features within the preamble of apparatus claim 1. However, although such an approach may be desirable in many scenarios, it may also be considered inconvenient to the user as such calibrations may at best delay the power transfer, and may in many scenarios require user involvement before power transfer can proceed. Such user involvement tends to be considered cumbersome and inconvenient by consumers and accordingly it is typically desired that user involvement can be minimized and preferably avoided.

Furthermore, whereas a single calibration at low power levels (and specifically prior to power transfer) may allow compensation for inherent and static characteristics of the specific power receiver and power transmitter, it does not compensate for dynamic effects and variations due to e.g. changing operating points (e.g. power level), temperature, variations in physical positions etc.

An improved power transfer system would accordingly be advantageous. In particular, an approach that allows improved operation while maintaining a user friendly approach and ensuring safe operation, especially at higher power levels, would be advantageous. Specifically, an approach that allows improved calibration/ adaptation of a power loss estimation would be advantageous. An improved power transfer system allowing increased flexibility, facilitated implementation, facilitated operation, safer operation, reduced risk of foreign object heating, increased detection accuracy, reduced user involvement and/or improved performance would be advantageous.

SUMMARY OF THE INVENTION

Accordingly, the Invention seeks to preferably mitigate, alleviate or eliminate one or more of the above mentioned disadvantages singly or in any combination.

The invention is set out in the appended set of claims. The embodiments and/or examples of the following description which are not covered by the appended claims are considered as not being part of the present invention.

According to an aspect of the invention there is provided an apparatus for a wireless power transfer system including a power receiver for receiving a power transfer from a power transmitter via a wireless inductive power signal; the apparatus comprising: a parasitic power loss detector arranged to perform a parasitic power loss detection during a power transfer phase, the parasitic power loss detection being arranged to indicate a positive detection of a parasitic power loss in response to a parasitic power loss estimate exceeding a first threshold, the parasitic power loss being indicative of a difference between a transmit power for the power transmitter and a receive power for the power receiver; a parameter processor arranged to generate parameter value sets for time instants during the power transfer phase, each parameter value set comprising a set of values indicative of the transmit power of the power transmitter and the receive power of the power receiver for the time instant of the parameter value set; a store for storing the parameter value sets; a foreign object detector for performing foreign object detection tests, each foreign object detection test estimating whether a foreign object is present or not, the foreign object detector using a different criterion for detecting a presence of a foreign object than the parasitic power loss detector uses for indicating a positive detection; a time processor for determining a first time window in response to a foreign object detection test indicating that no foreign object is present, the first time window at least partially preceding the foreign object detection test indicating that no foreign object is present; a retriever for retrieving a group of parameter value sets from the store, the retriever being arranged to select parameter value sets for time instants within the first time window for the group of parameter value sets; and a first adapter for adapting the parasitic power loss detection in response to the group of parameter value sets.

The approach may provide improved reliability and/or accuracy of parasitic power loss detection during the power phase. In particular, the approach may in many embodiments provide improved and more reliable detection of scenarios wherein a foreign object may potentially be present during power transfer from a power transmitter to a power receiver. In many embodiments, the approach may allow a faster detection of foreign objects. For example, the foreign object detection may be performed relatively rarely but be more accurate. E.g., the foreign object detection may require a user input or operation in a dedicated test mode. In contrast, the parasitic power loss may be performed at frequent intervals during the power transfer phase, and specifically without requiring any user input or dedicated test mode operation. Thus, if a foreign object enters the vicinity of the power transmitter, this may be detected by the parasitic power loss detection thereby avoiding a potentially significant delay until the next foreign object detection is performed. The approach may reduce the need for dedicated test mode foreign object detection in many scenarios, and indeed may in many scenarios reduce such foreign object detection tests e.g. to only unusual operating conditions.

The interaction between the different detections provide for an arrangement where the advantages of each approach can be combined. Specifically, the characteristics of the foreign object detection can be used to control the operation of the parasitic power loss detection which in turn may be used to e.g. detect the presence of foreign objects.

In particular, adapting the parasitic power loss detection based on operating parameter values in time intervals associated with a foreign object detection being indicative of no foreign object being present (but e.g. not based on operating parameter values of the power transfer phase outside such time intervals), allows a reliable adaptation/calibration of the parasitic power loss detection thereby increasing the detection performance.

The calibration/ adaptation approach may provide improved performance and may in many scenarios allow improved reliability, and/or increased fault protection/ detection. The approach may in particular allow an improved parasitic power loss detection, and may allow this to be adapted to the specific characteristics of the individual scenario and/or embodiment.

The approach may exploit the fact that a more accurate foreign object detection may provide a high degree of certainty that no foreign object is present in a suitable time interval associated with a foreign object detection test. The characteristics during this time interval can accordingly be considered to reflect the scenario where no foreign object is present. By adapting the parasitic power loss detection to these characteristics, an improved detection of parasitic power loss e.g. caused by the presence of a foreign object can be achieved.

The adaptation may be a short term adaptation, such as an adaptation which is only used for the current power transfer operation. This may for example allow an adaptation to the specific position of the power receiver relative to the power transmitter for the current operation without affecting performance for subsequent power transfer operations where the relative positioning of the devices may be different.

In many embodiments, the adaptation may be a long term adaptation which adapts the parameter for typically both the current power transfer mode operation as for future power transfer mode operations. The adaption may be specific to the power transmitter and power receiver pair.

The parasitic power loss detector may be arranged to continuously during the power transfer mode perform a parasitic power loss detection algorithm. The adaptation may adapt the parasitic power loss detection algorithm for future power transfers.

In many embodiments, the foreign object detection estimate may be a binary estimate indicating either that a foreign object has been detected or that a foreign object has not been detected (in a vicinity of the power transmitter).

A parasitic power loss may be any power dissipated from the power signal, which is not extracted by the power receiver.

When performing the foreign object detection test, the foreign object detector may assume that the power receiver is operating in a test mode. Specifically, the foreign object detector may assume that the loading of the wireless inductive power signal by the power receiver is constrained relative to the (allowable) loading of the wireless inductive power signal by the power receiver when operating in the power transfer mode during the power transfer phase. Specifically, when the power receiver is operating in the test mode the dynamic range for a loading of the wireless inductive power signal by the power receiver may be (assumed to be) constrained relative to an (allowable) dynamic range for the loading of the wireless inductive power signal by the power receiver when this is operating in the power transfer mode during the power transfer phase.

The parasitic power loss detector may be arranged to perform the parasitic power loss detection without assuming that the power receiver is operating in the test mode that is assumed by the foreign object detector. In many embodiments, the parasitic power loss detector may be arranged to perform the parasitic power loss detection without assuming that the power receiver is operating in any test mode.

The parameter processor and the parasitic power loss detector use different criteria for respectively detecting the presence of a foreign object and for generating an indication of a positive detection of a parasitic power loss. For example, the two detectors may use completely different approaches, e.g. the foreign object detector may simply perform foreign object detection by requesting and obtaining a user input. Thus, in some embodiments, the criterion for detecting a presence of a foreign object may be that a user input meets a criterion for indicating the presence of a foreign object. As another example, the foreign object detector may perform detection based on the same parasitic power loss estimate as used by the parasitic power loss detector but using a different second threshold.

The foreign object detector using a different criterion for detecting a presence of a foreign object than the parasitic power loss detector uses for indicating a positive detection may in many embodiments correspond to the parasitic power loss detector being arranged to perform the parasitic power loss detection without assuming that the power receiver is operating in a test mode that is assumed by the foreign object detector.

The foreign object detector using a different criterion for detecting a presence of a foreign object than the parasitic power loss detector uses for indicating a positive detection may in many embodiments correspond to a criterion for determining that a foreign object being present being different from a criterion for the parasitic power loss detector indicating a positive detection of a parasitic power loss. The foreign object detector using a different criterion for detecting a presence of a foreign object than the parasitic power loss detector uses for indicating a positive detection may in many embodiments correspond to, the foreign object detector when performing the foreign object detection test, assuming that the power receiver is operating in a test mode, and the parasitic power loss detector, when performing the parasitic power loss detection, not assuming that the power receiver is operating in the test mode (or possibly any test mode). Specifically, the foreign object detection can be based on an assumption of the power receiver being in a test mode wherein a loading of the wireless inductive power signal is constrained with respect to when the power receiver is in a power transfer mode

A parameter value set may comprise a set of one or more values with the set being indicative of the transmit power and the receive power. For example, a parasitic power loss estimate may be generated as an indication of a difference between a transmit power estimate and a receive power estimate. A parameter value set may consist of a single value indicative of this parasitic power loss estimate. In many embodiments, the set of values of a parameter value set may comprise a transmit power estimate value and a receive power estimate value.

A time instant for a parameter value set may be a time instant for which the values of the parameter value set reflect or represent the conditions. Specifically, a time instant for a parameter value set may correspond to a time instant for which at least one parameter value was determined/ measured.

The group of parameter value sets may be selected as all parameter value sets which are determined for time instants within the time interval. In some embodiments, the group of parameter value sets may only include a subset of the parameter value sets which are determined for time instants within the time interval. The group of parameter value sets may include only stored parameter value sets that fall within the time window. In many embodiments, the adaptor may be arranged to perform the adaptation based only on the group of parameter value sets.

In accordance with an optional feature of the invention, the parameter processor is arranged to generate a parameter value set in response to a detection of a power indication exceeding a second threshold, the power indication being an indication of at least one of: the transmit power for the power transmitter; the receive power for the power receiver; and a power loss estimate indicative of the difference between the transmit power and the receive power.

This may provide improved adaptation in many embodiments, and may specifically allow the adaptation to be based on parameter values that are likely to be indicative of unusual scenarios or operating conditions not previously encountered.

In accordance with an optional feature of the invention, the parameter processor is arranged to determine the second threshold in response to a power indication for a previously generated parameter value set.

This may provide improved adaptation in many embodiments, and may specifically allow the adaptation to be based on parameter values that are likely to be indicative of unusual scenarios or operating conditions not previously encountered. The power indication for the previously generated parameter value set may be a maximum value for the power indication. In many embodiments, the parameter processor may be arranged to generate a new parameter value set if a value of a power indication is detected to exceed a previous maximum value for the power indication.

In accordance with an optional feature of the invention, the parameter processor is arranged to generate a parameter value set in response to a detection that at least one of a transmit power estimate for the transmit power and a receive power estimate for the receive power exceeds a range for which a previous adaptation of the parasitic power loss detection has been performed.

This may provide improved adaptation in many embodiments, and may specifically allow the adaptation to be based on parameter values that are likely to extend the range for which the parasitic power loss detection has been adapted/calibrated. Thus, the approach may allow for not previously encountered operating points to be detected and for parameter value sets reflecting such scenarios to be generated, and potentially used for adaptation (dependent on the subsequent foreign object detection).

In some embodiments the parameter processor may be arranged to generate a parameter value set in response to a detection that a transmit power estimate exceeds a previous adaptation range, in other embodiments it may be arranged to generate a parameter value set in response to a detection that a receive power estimate exceeds a previous adaptation range, and in yet other embodiments it may be arranged to generate a parameter value set in response to a detection that either a transmit power estimate exceeds a previous adaptation range or a receive power estimate exceeds a previous adaptation range.

An adaptation range for a given parameter may be a range from the smallest adaptation input (e.g. measured) value to the largest adaptation input (e.g. measured) value that has been used for adaptation.

In accordance with an optional feature of the invention, the first adaptor is further arranged to perform a test mode adaptation of the parasitic power loss detection, the test mode adaptation being in response to test mode parameter value sets for a plurality of different power receiver test loads, each test mode parameter value set comprising a set of values indicative of the transmit power and the receive power value for one power receiver test load.

Such an approach may allow a substantially improved parasitic power loss detection. In particular, it may in many embodiments provide an initial adaptation thereby allowing an improved initial parasitic power loss detection. The initial adaptation may subsequently be further improved by adaptations based on parameter value sets generated during the power transfer phase (i.e. during active power transfer to a variable load of the power receiver).

In many embodiments, the test mode adaptation may be performed during initialization and/or prior to the power transfer phase. One power receiver test load may correspond to a minimum load for the power receiver.

The adaptor may be arranged to receive a plurality of receive power estimates from the power receiver during the test mode adaptation, the plurality of receive power estimates providing indications of a power received by the power receiver for different test loads of the power receiver; and the adaptor being arranged to adapt a plurality of parameters of the parasitic power loss detection in response to the plurality of receive power estimates.

The adaptor may be arranged to adapt at least one of a calibration offset and a calibration scale factor for at least one of a transmitter power estimate, a parasitic power loss estimate, and a receive power estimate in response to the plurality of receive power estimates.

In accordance with an optional feature of the invention, the plurality of different power receiver test loads are comprised in a range which is smaller than an operating range of power receiver loads for the power transfer phase.

The test mode adaptation may perform adaptation/ calibration for a reduced operating range, and the adaptation based on parameter value sets of the power transfer phase may extend this adaptation range to larger operating ranges. The interaction and combination of an initial more accurate but limited adaptation with a subsequent extension of the adaptation range during power transfer may provide advantageous operation in many embodiments.

In accordance with an optional feature of the invention, the parameter processor is arranged to generate a parameter value set in response to a detection of a receive power estimate for the receive power exceeding a range corresponding to the range of different power receiver test loads.

This may improve adaptation and may allow an efficient approach for ensuring that data is collected which can expand the initial adaptation range.

In accordance with an optional feature of the invention, the first adaptor is arranged to perform the test mode adaptation as part of an initialization of a power transfer phase.

This may provide particularly advantageous operation and performance in many embodiments.

In accordance with an optional feature of the invention, the foreign object detector is arranged to trigger a foreign object detection test in response to a detection of a power indication exceeding a second threshold, the power indication being an indication of at least one of: the transmit power for the power transmitter; the receive power for the power receiver; and a power loss estimate indicative of the difference between the transmit power and the receive power.

This may provide particularly advantageous operation and performance in many embodiments. In particular, it may in many scenarios and embodiments allow foreign object detection to be performed particularly when there is an increased possibility that a foreign object may be present, or e.g. when the system is operating at unusual or not previously encountered operating points.

In accordance with an optional feature of the invention, the foreign object detector is arranged to trigger a foreign object detection test in response to a detection of a power transfer operating parameter being outside a reference range.

This may provide particularly advantageous operation and performance in many embodiments. In particular, it may in many scenarios and embodiments allow foreign object detection to be performed particularly when there is an increased possibility that a foreign object may indeed be preset, or e.g. when the system is operating at unusual or not previously encountered operating points.

The reference range may in many embodiments be a predetermined range or may be a dynamically determined range.

In accordance with an optional feature of the invention, the first adapter is arranged to trigger the adaptation in response to a foreign object detection test indicating that no foreign object is present.

This may provide particularly advantageous operation and performance in many embodiments.

In accordance with an optional feature of the invention, the apparatus may be the wireless power transmitter.

In accordance with an optional feature of the invention, the apparatus may be the wireless power receiver.

According to an aspect of the invention there is provided a method of operation for an apparatus for a wireless power transfer system including a power receiver for receiving a power transfer from a power transmitter via a wireless inductive power signal; the method comprising: performing a parasitic power loss detection during a power transfer phase, the parasitic power loss detection being arranged to indicate a positive detection of a parasitic power loss in response to a parasitic power loss estimate exceeding a first threshold, the parasitic power loss being indicative of a difference between a transmit power for the power transmitter and a receive power for the power receiver; generating parameter value sets for time instants during the power transfer phase, each parameter value set comprising a set of values indicative of the transmit power of the power transmitter and the receive power of the power receiver for the time instant of the parameter value set; storing the parameter value sets in a store; performing foreign object detection tests, each foreign object detection test estimating whether a foreign object is present or not, the foreign object detection tests using a different criterion for detecting a presence of a foreign object than the parasitic power loss detection uses for indicating a positive detection; determining a first time window in response to a foreign object detection test indicating that no foreign object is present, the first time window at least partially preceding the foreign object detection test indicating that no foreign object is present; retrieving a group of parameter value sets from the store, the retriever being arranged to select parameter value sets for time instants within the first time window for the group of parameter value sets; and adapting the parasitic power loss detection in response to the group of parameter value sets.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

Fig. 1 illustrates an example of elements of a power transfer system in accordance with some embodiments of the disclosure;

Fig. 2 illustrates an example of elements of a power transfer system in accordance with some embodiments of the disclosure;

Fig. 3 illustrates an example of elements of a half-bridge inverter for a power transmitter in accordance with some embodiments of the disclosure;

Fig. 4 illustrates an example of elements of a full-bridge inverter for a power transmitter in accordance with some embodiments of the disclosure; and

Fig. 5 illustrates an example of elements of a power transmitter in accordance with some embodiments of the disclosure; and

Fig. 6 illustrates an example of elements of a power receiver in accordance with some embodiments of the disclosure.

DETAILED DESCRIPTION OF SOME EMBODIMENTS OF THE DISCLOSURE

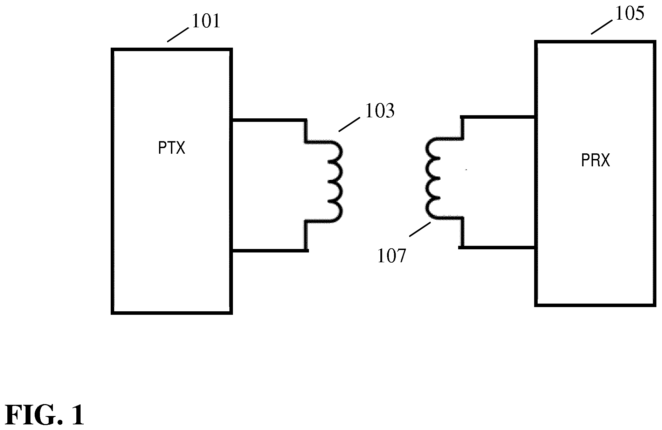

Fig. 1 illustrates an example of a power transfer system in accordance with some embodiments of the disclosure. The power transfer system comprises a power transmitter 101 which includes (or is coupled to) a transmitter coil/ inductor 103. The system further comprises a power receiver 105 which includes (or is coupled to) a receiver coil/ inductor 107.

The system provides a wireless inductive power transfer from the power transmitter 101 to the power receiver 105. Specifically, the power transmitter 101 generates a wireless inductive power signal (also for brevity referred to as a power signal, power transfer signal or inductive power signal), which is propagated as a magnetic flux by the transmitter coil 103. The power signal may typically have a frequency between around 100 kHz to 200 kHz. The transmitter coil 103 and the receiver coil 105 are loosely coupled and thus the receiver coil picks up (at least part of) the power signal from the power transmitter 101. Thus, the power is transferred from the power transmitter 101 to the power receiver 105 via a wireless inductive coupling from the transmitter coil 103 to the receiver coil 107. The term power signal is mainly used to refer to the inductive signal between the transmitter coil 103 and the receiver coil 107 (the magnetic flux signal), but it will be appreciated that by equivalence it may also be considered and used as a reference to the electrical signal provided to the transmitter coil 103, or indeed to the electrical signal of the receiver coil 107.

In the following, the operation of the power transmitter 101 and the power receiver 105 will be described with specific reference to an embodiment in accordance with the Qi standard (except for the herein described (or consequential) modifications and enhancements). In particular, the power transmitter 101 and the power receiver 103 may substantially be compatible with the Qi Specification version 1.0 or 1.1 (except for the herein described (or consequential) modifications and enhancements).

To control the power transfer, the system may proceed via different phases, in particular a selection phase, a ping phase, identification and configuration phase, and a power transfer phase. More information can be found in chapter 5 of part 1 of the Qi wireless power specification.

Initially, the power transmitter 101 is in the selection phase wherein it merely monitors for the potential presence of a power receiver. If such a potential presence is detected, the power transmitter 101 enters the ping phase wherein a power signal is temporarily generated. The power receiver 105 can apply the received signal to power up its electronics. After receiving the power signal, the power receiver 105 communicates an initial signal strength packet to the power transmitter 101. Thus, in the Ping phase it is determined whether a power receiver 105 is present at the interface of the power transmitter 101.

Upon receiving the signal strength message, the power transmitter 101 moves into the Identification & Configuration phase wherein the power receiver 105 keeps its output load disconnected and communicates messages to the power transmitter 101 to configure this.

In some systems, the Identification and Configuration phase may be followed by a Negotiation phase wherein bidirectional communication is employed by the power transmitter 101 and the power receiver 105 to establish various operating parameters.

Following the Identification and Configuration phase, or alternatively following the Negotiation phase, the system moves on to the power transfer phase where the actual power transfer takes place. Specifically, after having communicated its power requirement, the power receiver 105 connects the output load and supplies it with the received power. The power receiver 105 monitors the output load and measures the control error between the actual value and the desired value of a certain operating point. It communicates such control errors to the power transmitter 101 at a minimum rate of e.g. every 250 ms to indicate these errors to the power transmitter 101 as well as the desire for a change, or no change, of the power signal.

The power transfer operation is based on a wireless magnetic flux power signal (the wireless inductive power signal, or just power signal) being generated by the power transmitter 101 and being captured by the power receiver 105. Thus, the power signal induces a voltage and current in the receive coil 107. However, the power signal will also induce currents in any other conductive material including e.g. metallic parts of the power receiver 105 or the power transmitter 101. Furthermore, if other objects, known as foreign objects, are positioned sufficiently close to the transmit coil 103, substantial currents may be induced in conductive parts of such objects. For example, substantial eddy currents may be induced which may result in heating of the object. If too much power is induced in the foreign object, this may heat up substantially. Thus, in addition to the undesirable power loss, the induced power in foreign objects may also result in undesirable, and perhaps even almost unsafe situations. As an example, a user may inadvertently put a set of keys next to a mobile phone being charged by a power transmitter. This may result in the set of keys heating substantially. The problem is exacerbated for higher powers, and has become more critical for e.g. the Qi power transfer approach when this is being expanded to higher power levels.

In order to address such risks, the system of FIG. 1 comprises functionality for performing a parasitic power loss detection which detects if an estimated parasitic power loss estimate increases beyond a certain level, and specifically whether it exceeds a first threshold. The parasitic power loss detection is in the example being performed during the power transfer phase, and is active during the power transfer to the power receiver 105. This allows the system to substantially continuously test for the possible presence of foreign objects (e.g. by periodically performing the test throughout the power transfer phase). This may e.g. allow the system to detect if a foreign object is positioned close to the power transmitter 101 during an ongoing power transfer operation.

However, performing accurate parasitic power loss estimation and detection during an active power transfer phase is difficult due to the increased relative accuracy that is required at higher power levels and to the dynamically varying operating conditions. Thus, performing a parasitic power loss detection during the power transfer phase is much more difficult than e.g. performing a parasitic power loss detection during a Negotiation phase where the power of the wireless inductive power signal is low and the loading by the power receiver 105 is known to a high degree (and typically is minimal).

In order to address this issue, the system of FIG. 1 comprises functionality for adapting/ calibrating the parasitic power loss detection. The adaptation is based on operating parameter values that are measured/ determined during the power transfer phase and can accordingly more accurately reflect the conditions that are experienced during this phase. In many embodiments, the approach may allow a dynamic adaptation and/or e.g. an adaptation that expands the operating range for which the system has been adapted. The approach may allow an improved adaptation of the parasitic power loss detection and accordingly may result in improved parasitic power loss detection, and thus in many embodiments may provide improved foreign object detection during the power transfer phase.

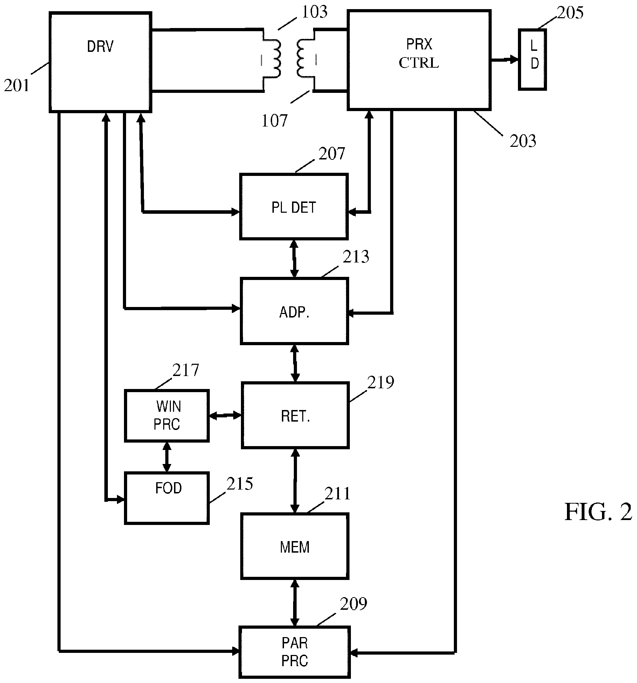

In more detail, FIG. 2 illustrates additional elements of the system of FIG. 1.

Fig. 2 illustrates a driver 201 which is coupled to the transmit coil 103 and which generates the power signal and provides this to the transmit coil 103. Thus, the driver 201 provides the wireless inductive power signal to the power receiver 105 via the transmit coil 103 (and the receive coil 107).

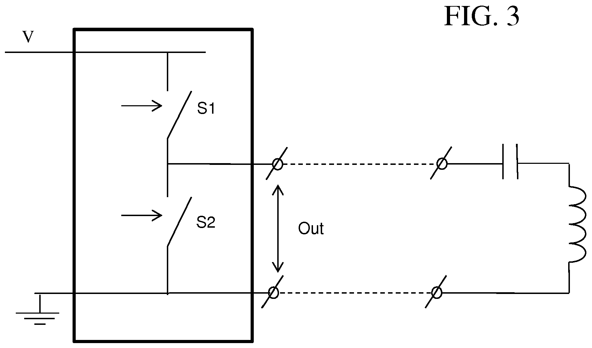

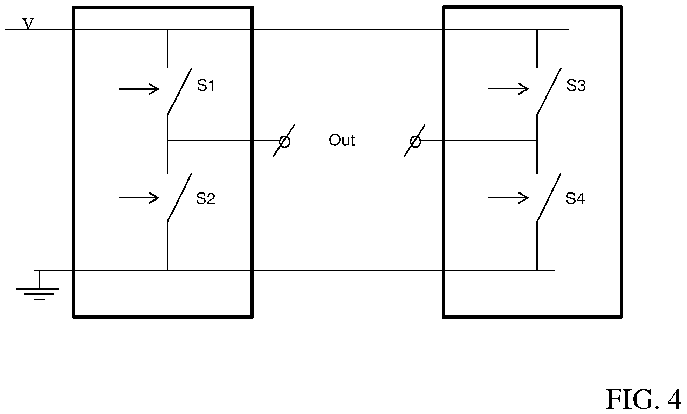

The driver 201 generates the current and voltage which is fed to the transmitter coil 103. The driver 201 is typically a drive circuit in the form of an inverter which generates an alternating signal from a DC Voltage. Fig. 3 shows a half-bridge inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically the output of the inverter is connected to the transmitter coil via a resonance capacitor. Fig. 4 shows a full-bridge inverter. The switches S1 and S2 are controlled such that they are never closed at the same time. The switches S3 and S4 are controlled such that they are never closed at the same time. Alternatingly switches S1 and S4 are closed while S2 and S3 are open, and then S2 and S3 are closed while S1 and S4 or open, thereby creating a block-wave signal at the output. The switches are open and closed with the desired frequency.

The driver 201 also comprises control functionality for operating the power transfer function and may specifically comprise a controller arranged to operate the power transmitter 101 in accordance with the Qi Specification. For example, the controller may be arranged to perform the Identification and Configuration as well as the power transfer phases of the Qi Specification.

The receiver coil 107 is coupled to a power receiver controller 203, which comprises various functionality for operating the power transfer function, and is in the specific example arranged to operate the power receiver 105 in accordance with the Qi Specification. For example, the power receiver 105 may be arranged to perform the Identification and Configuration as well as the power transfer phases of the Qi standard.

The power receiver controller 203 is arranged to receive the power signal and to extract the power during the power transfer phase. The power receiver controller 203 is coupled to a power load 205 which is the load powered from the power transmitter 101 during the power transfer phase. The power load 205 may be an external power load but is often part of the power receiver device, such as a battery, display or other functionality of the power receiver (e.g. for a smart phone the power load may correspond to the combined functionality of the smart phone).

The system further comprises a detector, henceforth referred to as the parasitic power loss detector 207, which is arranged to generate a parasitic power loss detection for the power transfer during the power transfer phase. The parasitic power loss detection is arranged to detect a parasitic power loss in response to a parasitic power loss estimate exceeding a threshold where the parasitic power loss estimate is indicative of a difference between a transmit power for the power transmitter and a receive power for the power receiver, and specifically indicative of the difference between the power of the wireless inductive power signal as generated by the power transmitter 101 and the power extracted from the wireless inductive power signal by the power receiver 105.

Thus, the parasitic power loss detector 207 may generate a parasitic power loss estimate indicative of a power difference between a transmit power estimate for the power transmitter 101 and a receive power estimate for the power receiver 105, and to detect if the difference between these falls outside a range.

The parasitic power loss detector 207 may specifically determine the estimated parasitic power loss as:

$$P_{loss} = P_{tx} - P_{rx}$$

where $P_{tx}$ is the transmit power estimate (specifically an estimate of the power provided to the wireless inductive power signal by the power transmitter 101) and $P_{rx}$ is the receive power estimate (specifically an estimate of the power extracted from the wireless inductive power signal by the power receiver 105).

The receive power estimate may include both the intended power extracted by the power receiver 105 (e.g. the power extracted by the receive inductor 107 for powering internal or external loads) as well as possibly unintended losses (such as incurred by eddy currents being induced in metallic parts of the power receiver 105).

The parasitic power loss detector 207 may typically consider a transmit power estimate generated by the power transmitter 101.

As a simple example, the transmit power estimate may be determined as the power which is fed to the transmitter coil 103 or may e.g. be determined as the input power to the inverter stage of the driver 201. For example, the power transmitter 101 may measure the current through the transmitter coil 103, the voltage over the transmitter coil 103 and the phase difference between the voltage and current. It can then determine the corresponding (time averaged) power based on these values. As another example, the supply voltage of the inverter is typically constant, and the power transmitter 101 may measure the current drawn by the inverter and multiply this by the constant voltage to determine the input power to the inverter. This power may be used as the transmit power estimate.

In many embodiments, a slightly more complex transmit power estimate is generated. In particular, the approach may compensate the calculated power for losses in the power transmitter 101 itself. In particular, losses in the transmitter coil 103 itself may be calculated, and the input power may be compensated by this value to provide an improved indication of the power, which is transmitted from the transmitter coil 103.

The power loss in the transmitter coil 103 may be calculated as:

$$P_{losscoil} = R \cdot I_{coil}^2$$

where $I_{coil}$ is the RMS current through the transmitter coil 103 and R is the equivalent resistance of the transmitter coil 103. Assuming the resistance is known, the transmitted power may be estimated by:

$$P_{tx} = V_{coil} \cdot I_{coil} \cdot \cos(\varphi) - R \cdot I_{coil}^2$$

where $V_{coil}$ is the voltage over the transmitter coil 103 and $\Phi$ is the phase between $V_{coil}$ and $I_{coil}$.

R may depend on the frequency of the transmitter coil current, e.g. according to a function such as: $R = R_b + R_f \cdot f$, where $R_b$ is the frequency independent part of the equivalent resistance, $R_f$ is the frequency dependent part of the equivalent resistance, and f is the frequency.

Further, the parasitic power loss detector 207 may typically consider a receive power estimate generated by the power receiver 105.

The receive power estimate may directly be estimated as the power that is provided to the load of the power receiver 105. However, in many embodiments, the power receiver 105 will generate a receive power estimate which also includes power loss/ dissipation in the power receiver 105 itself. Thus, the reported received power indication may include both power provided to the load as well as power loss in the power receiver 105. For example, it may include measured or estimated power loss in the rectification circuits and/or the receiver coil. In many embodiments, the receive power estimate may also include estimates of power dissipated in e.g. conductive parts of the power receiver enclosure.

Typically time averaged values are used, e.g. with the power values being determined as average values in suitable time intervals, with the time intervals preferably being synchronized between the power transmitter 101 and the power receiver 105. The time intervals are however typically relative short (e.g. no more than 1 s, 2s, 5s, or 10 s.).

The parasitic power loss detector 207 may subtract the receive power estimate from the transmit power estimate to determine the parasitic power loss estimate. The parasitic power loss estimate is an estimate of the amount of power that is not dissipated or consumed by the power receiver 105 (including the power provided to the load 205). Thus, the parasitic power loss estimate can be considered to be an estimate of power that is consumed by other devices than the power receiver 105 (or the power transmitter 101). Thus the parasitic power loss estimate is an estimate of losses that may occur in other entities, such as foreign objects positioned near the transmit coil 103. The parasitic power loss estimate may specifically be a foreign object estimate, and in many embodiments the parasitic power loss detection may be used as a foreign object detection.

The parasitic power loss detector 207 is arranged to consider a parasitic power loss to be detected if the parasitic power loss estimate meets a parasitic power loss criterion corresponding to the parasitic power loss estimate exceeding a threshold, which may be a predetermined threshold. Thus, the parasitic power loss detector 207 and the parasitic power loss detection is arranged to indicate a positive detection of a parasitic power loss in response to a parasitic power loss estimate exceeding a first threshold. In some embodiments, the parasitic power loss detector 207 may simply compare the difference between the transmit power estimate and the receive power estimate to a given threshold and indicate that a parasitic power loss has been detected if the threshold is exceeded. This may indicate that the loss in a foreign object may be too high and that there is a potential risk of an unwanted heating of a foreign object.

If a parasitic power loss is detected, the power transmitter 101 may e.g. be informed and may in response terminate the power transfer phase or reduce the power levels that are inherently safe/ acceptable even if inducted in a foreign object.

The system further comprises functionality for dynamically adapting/ calibrating the parasitic power loss detection operation based on values of operating parameters during the power transfer.

The system comprises a parameter processor 209 which is arranged to determine parameter value sets comprising parameter values for operating parameters during power transfer of the power transfer phase. The parameter values may be determined based on measurements of one or more parameters of the power transfer during the power transfer phase.

The parameter processor 209 is specifically arranged to determine values that are indicative of a transmit power for the power transmitter and a receive power for the power receiver, and specifically values that are indicative of the power of the wireless inductive power signal generated by the power transmitter 101 and the power extracted from the wireless inductive power signal by the power receiver 105 respectively. In some embodiments, the determined parameter values may be for a power loss, e.g. it may be the difference between an estimated transmit power and an estimated receive power. It will be appreciated that such a power loss estimate/ difference is also indicative of the receive power and the transmit power.

The parameter processor 209 may specifically determine the values as the transmit power estimate, receiver power estimate, and/or parasitic power loss estimate that are also used by the parasitic power loss detector 207 for the for the parasitic power loss detection. Thus, the parameter processor 209 and the parasitic power loss detector 207 may use the same parameters and may consider the same estimates.

The parameter processor 209 thus generates parameter values for time instants during the power transfer phase. For example, it may generate a set of parameter values intermittently or periodically. Each set of parameter values are thus associated with a time. In many embodiments, the parameter values for a given time instant may be based on measurements at that time instant. In some embodiments, the parameter values may represent conditions during e.g. a time interval, such as e.g. due to the values being averaged over a time interval. In such a case, the time instant associated with the parameter values may for example be considered to be a midpoint or end-point of the time interval.

As an example, the parasitic power loss detector 207 may perform a parasitic power loss detection test every 1 second. Each time a test is performed, a transmit power estimate and a receive power estimate may be determined (e.g. based on measurements or received messages). Furthermore, each time a test is performed, the parameter processor 209 may obtain the receive power estimate and transmit power estimate and combine these into a parameter set. Alternatively, the parameter processor 209 may obtain or generate the parasitic power loss estimate and may generate a parameter value set containing only this parameter value.

Thus, for each test time instant, the parameter processor 209 generates a parameter value set which comprises one or more parameter values that are indicative of the transmit power and receive power.

It will be appreciated that although the present example describes an embodiment wherein the time instants for generating parameter value sets are periodic and coincide with test instants for the parasitic power loss detection, this is merely exemplary and is not essential to the approach. Indeed, in some embodiments, the parameter value sets may be generated independently of the parasitic power loss detection and/or may be generated for non-periodic time instants. For example, the parameter processor 209 may detect a specific event occurring and may in response generate a parameter value set.

It will also be appreciated that whereas the following description will focus on examples where each parameter value set comprises one transmit power estimate value and one receive power estimate value, parameter value sets may in other embodiments additionally or alternatively comprise values for other parameters. For example, in many embodiments, a parasitic power loss estimate may alternatively or additionally be included in the parameter value sets. Indeed, in many embodiments, each parameter value set may consist in only a single parasitic power loss estimate value.

The parameter values stored in a parameter value set include one or more indications of the transmit power and the receive power for the time instant of the parameter value set. The value (or values) included in a given parameter value set accordingly reflects the power transfer operation at the associated time instant.

The system of FIG. 2 further comprises a store/ memory 211 which is coupled to the parameter processor 209. The parameter processor 209 is arranged to store the generated parameter value sets in the memory 211. Thus, when the parameter processor 209 generates a new parameter value set, it proceeds to store the values in the memory 211.

In many embodiments, the parameter processor 209 may also store a time instant indication for the parameter value set. This may be particularly suitable for embodiments where the actual times for which the parameter value sets are generated are not known in advance. However, in other embodiments, the parameter processor 209 may only store the determined parameter values. For example, if a parameter value set is generated periodically, say every second, the parameter processor 209 may simple store the generated parameter values, and the time instant associated with the stored parameter values can simply be determined from the memory position of the parameter value. E.g. the memory 211 may implement a circular buffer and the number of positions between a current write position and the position of a given parameter value may directly reflect how long ago the parameter value was determined.

The system further comprises a calibrator or adaptor 213 which is arranged to adapt the parasitic power loss detection based on the stored parameter value sets. The adaptor 213 is coupled to the memory 211 and the parasitic power loss detector 207 and is specifically in the embodiment arranged to determine a compensation value based on the stored parameter value set, and to feed this compensation factor to the parasitic power loss detector 207. The parasitic power loss detector 207 is then arranged to include the provided compensation factor in the parasitic power loss detection operation.

In the system of FIG. 1 and 2, the adaptation is not based on all operating parameter values that are generated during the power transfer phase but only on operating parameter values which are generated during some time intervals of the power transfer phase. Indeed, the adaptation is based only on parameter value sets that are associated with time instants within one or more valid time intervals/ time windows.

The valid time intervals are determined as time intervals in which it is considered that there is a high probability that no foreign objects are present. This is determined using a separate foreign object detection which typically is one that provides an accurate detection of whether a foreign object is present or not.

Accordingly, the system of FIG. 2 comprises a foreign object detector 215 which is arranged to perform foreign object detection tests where each foreign object detection test estimates whether a foreign object is present in a vicinity of the power transmitter or not.

The foreign object detector 215 uses a different criterion for detecting the presence of a foreign object than the parasitic power loss detector 207 uses for determining and indicating a positive detection of a parasitic power loss.

For example, in some embodiments, the foreign object detector 215 may comprise a user interface and it may perform a foreign object test simply be requesting a user to provide a user input indicating whether there is a foreign object present or not. If the user indicates that a foreign object is not present, the foreign object detector 215 generates a test output indicating no presence of a foreign object and otherwise it generates a test output indicating the potential presence of a foreign object. The adaptation will in this case only proceed if a user has explicitly indicated that there is no foreign object present. If the user indicates that a foreign object is (potentially) present, or no appropriate user input is received, no adaptation is performed.

As another example, the foreign object detector 215 may be arranged to enter the power receiver 105 and the power transmitter 101 into a test mode of operation. In this mode the loading of the wireless inductive power signal by the power receiver 105 may be constrained, and e.g. reduced to very low levels. The foreign object detector 215 may then measure the transmitted power and consider a foreign object to be detected if this transmitted power exceeds a threshold.

Specifically, the foreign object detector 215 may be arranged to generate a foreign object detection estimate in response to a comparison of a measured load of the wireless inductive signal to an expected load of the wireless inductive power signal when the power receiver is operating in the test mode.

As yet another example, the foreign object detector 215 may be arranged to base the detection on the same power loss estimate as generated by the parasitic power loss detector 207 but may use a different and smaller threshold for detecting a foreign object than is used by the parasitic power loss detector 207 to detect a parasitic power loss.

Accordingly, adaptation will only occur when there is a very high probability of no foreign object being present.

The foreign object detection estimate may specifically be a binary estimate which indicates whether it is estimated that a foreign object is present or not, i.e. whether a foreign object has been detected or whether a foreign object has not been detected.

The foreign object detector 215 may specifically operate in a test mode wherein the operating point of the power transfer is constrained. Specifically, the foreign object detection may in many embodiments be based on the power receiver operating with a constrained operating parameter, and thus, the foreign object detection may assume that the operation of the power receiver 105 is within typically a very narrow operating range which may assist the detection of the foreign object.

Specifically, the power receiver 105 may be constrained to operate with a loading of the wireless inductive power signal which is constrained relative to the operation when in the power transfer phase. This may in many embodiments be achieved by the power receiver having a predetermined and fixed power drain. In many embodiments, the power receiver 105 may be constrained to a fixed and predetermined load. For example, rather than the power receiver 105 providing power to the load 205 (which typically varies dynamically), the load 205 may be disconnected when the power receiver 105 is in the test mode. The power receiver 105 may instead be connected to a fixed and predetermined test load, or may in some embodiments not be connected to any load, when in the test mode.

The foreign object detection may accordingly be based on more specific knowledge of the power receiver's 105 operating point than can be done for the parasitic power loss detection which operates during power transfer. Furthermore, the operating point may be selected to facilitate the foreign object detection. This may in many scenarios specifically be achieved by selecting a relatively low and constant loading of the power receiver 105.

In some embodiments, the power receiver 105 may provide a predetermined and low loading of the wireless inductive power signal, and the foreign object detection may simply correspond to a detection of whether the transmit power exceeds a threshold or not. Thus, if the transmit power exceeds a given threshold when in the test mode, a binary foreign object detection test outcome may be set to indicate that a foreign object has been detected and otherwise it may be set to indicate that a foreign object has not been detected.

In some examples, a similar approach to that of the parasitic power loss detection may be performed, i.e. the difference between a transmit power and a receive power may be compared to a threshold. If the difference exceeds the threshold, the foreign object detection estimate may indicate that a foreign object has been detected, and otherwise it may indicate that a foreign object has not been detected. However, due to the restricted operating range (typically low loads), such an approach may result in substantially more accurate detection.

E.g., when a foreign object detection is performed the power receiver may enter a test mode with pre-defined conditions. Specifically, the power receiver can disconnect its target load and instead be connected to an accurate pre-defined load, e.g. formed by a relatively high precision resistor.

The power receiver can accordingly more accurately determine the power consumption of this load. For example, it would be sufficient to e.g. only measure the voltage on the predetermined load, and it would not be necessary to measure the current through the load, or to consider any phase differences between current and voltage. In addition, the power receiver 105 may set the voltage on the test load to a predefined level. This results in a predefined current through the load, and also in a predefined current through the rectifier and the receiver coil. This allows for the power loss in the receiver inductor 107 and the rectifier to be determined more accurately.

Accordingly, the test mode allows for a very accurate determination of the power extracted by the power receiver 105, and thus of the loading of the wireless inductive power signal. Accordingly, due to the predefined load condition, the power receiver 105 can more accurately determine the received power. The receive power estimate can be provided to the foreign object detector 215. In addition, the power transmitter 101 can typically determine the transmit power with a relatively high accuracy, and a transmit power estimate can accordingly be provided to the foreign object detector 215. This may then determine the difference and compare it to a detection threshold.

Thus, in such an embodiment, the foreign object detection can be based on an assumption of the power receiver being in a test mode wherein a loading of the wireless inductive power signal is constrained with respect to when the power receiver is in a power transfer mode. The foreign object detection in the test mode is based on an expected load for the power receiver when this is in the test mode, i.e. when the loading of the wireless inductive power signal is constrained. However, the parasitic power loss detection which is performed during (normal) power transfer is not based on the assumption of the power receiver operating with a constrained operating parameter, and specifically is not based on the expected load of the wireless inductive power signal when the power receiver 105 is operating in the test mode. Accordingly, the parasitic power loss detection must accommodate for a much larger operating range and therefore the parasitic power loss detection by the parasitic power loss detector 207 will tend to be much more inaccurate than the foreign object detection by the foreign object detector 215.

For example, when in the test mode, the loading of the wireless inductive power signal by the power receiver may correspond to no power being provided to the external power receiver load. Thus, the loading of the wireless inductive power signal may correspond to only the loading resulting from eddy currents being induced in metallic parts of the power receiver and to the potential powering of the internal electronics. Accordingly, a very low loading of the wireless inductive power signal is expected in this test mode. Any additional power dissipation in foreign objects will accordingly represent a high proportion of the total power dissipation and accordingly will be easy to detect.

In contrast, when the system is operating in the power transfer mode, the power receiver is providing power to the external load. This power may be very substantial, and may typically be substantially higher than the power which is likely to be induced in any foreign objects present. Accordingly, the detection of a parasitic power loss is much more difficult and will be substantially less reliable in the power transfer phase than when the system is operating in the test mode.

Thus, in the described embodiments, the foreign object detection by the foreign object detector 215 is more accurate/reliable than the parasitic power loss detection by the parasitic power loss detector 207.

Although the parasitic power loss detection and the foreign object detection may in many embodiments both be used to try to detect foreign objects and may indeed be based on the same approach of determining a parasitic power loss estimate for the difference between the transmit power and the receive power, it will be appreciated that this is merely exemplary. For example, in some embodiments, the foreign object detection may be based on a user input and not consider any measured values, and specifically may not calculate a parasitic power loss estimate. As another example, in some embodiments, the parasitic power loss detection may not be used to detect foreign objects but may e.g. be used to detect if errors occur in the power receiver causing this to report incorrect receive power estimates.

In order to improve the accuracy of the parasitic power loss detection in the power phase, the parasitic power loss detection is in the system calibrated/ adapted dynamically by the adaptor 213. Specifically, the system is arranged to adapt a first parameter of the parasitic power loss detection in response to operating parameter values when the system is in the power transfer phase. Specifically, the system may adapt a parameter of the calculation of the power loss estimate and/or of the detection threshold in dependence on at least one of transmit power estimates and receive power estimates. However, rather than continuously adapting the parasitic power loss detection, the adaptation is restricted to only be based on operating parameter values (specifically on receive/ transmit power estimates) that are received in specific time intervals of the power transfer phase. Thus, only parameter value sets generated for these time intervals are considered when adapting the parasitic power loss detection. Thus, in the approach the system is arranged to exclude from the adaptation operating parameter values and parameter value sets that reflect conditions at time instants which are part of the power transfer phase but which are outside the identified time intervals.

The time intervals in which the operating parameter values are considered are determined in response to the foreign object detection tests. Specifically, if the foreign object detector 215 performs a foreign object detection which is negative (i.e. the test indicates that no foreign object is present), then the parameter value sets that are stored for time instants close to the time of the test are used for adapting the parasitic power loss detection.

In the system of FIG. 2, a time processor 217 is coupled to the foreign object detector 215. When the foreign object detector 215 performs a test which indicates that that no foreign object is present, the time processor 217 proceeds to determine a time window in which the parameter value sets are considered to be valid (i.e. are considered to reflect conditions of the power transfer where no foreign object is present). The time windows determined by the time processor 217 to include valid parameters are referred to as valid time windows or intervals.

The valid time window determined by the time processor 217 in response to a negative foreign object detection test at least partially precedes the time instant for which the test was performed. For example, if the foreign object detector 215 provides an indication of a negative test outcome, the time processor 217 may determine a time interval as e.g. the 20 seconds preceding the test. Thus, in this way, the time processor 217 determines that if a foreign object is not detected, the stored parameter value sets for the previous 20 seconds are consider to be valid (and thus are considered to represent a scenario where no foreign object is present).

In some embodiments, the valid time window may be terminated at the time of the negative foreign object detection. In other embodiments, the valid time window may continue and include a time interval following the valid time window. Indeed, in some embodiments, a valid time window may be substantially symmetric around the foreign object detection test time.

The time processor 217 is coupled to a retriever 219 which is further coupled to the memory 211 and to the adaptor 305. The retriever 219 is arranged to retrieve a group of parameter value sets from the memory 211 by selecting stored parameter value sets for time instants that are within the valid time interval determined by the time processor 217. These retrieved parameter value sets are thus considered to correspond to a scenario in which no foreign object is present and accordingly they are fed to the adaptor 213 which proceeds to adapt the parasitic power loss detection in response to the operating parameter values of the selected parameter value sets (henceforth referred to as valid parameter value set).

However, the retriever 219 may ignore or discard parameter value sets that are not within a valid time interval. Thus, operating parameter values for times that are not sufficiently close to a negative foreign object detection are considered to be invalid as there is an increased risk that they could correspond to a scenario where a foreign object is potentially present. Accordingly, these parameter value sets are considered invalid and may be discarded. As a result, the adaptation of the parasitic power loss detection is based only one operating parameter values that are considered to be highly likely of reflecting a scenario wherein no foreign object is present.

A substantial advantage of the approach is that the adaptation of the parasitic power loss detection allows for much more accurate operation and allows not only the parasitic power loss detection to be adapted to the specific power transmitter and power receiver, but in many embodiments also allows it to be adapted to the specific current conditions (including e.g. current power levels in the power transfer phase). Furthermore, by restricting the adaptation to be based on operating parameter values that reflect the power transfer (and specifically the receive power and transmit power) during valid time intervals (but not on operating parameter values that reflect operating conditions outside valid time intervals), the adaptation is restricted to reflect the conditions directly preceding an accurate detection that no foreign object is present. Thus, the adaptation is based on the conditions which are present during a time where the risk of a foreign object being present is very low. Accordingly, the risk that the parasitic power loss detection is adapted to reflect a scenario wherein a foreign object is present can be substantially reduced.

The approach accordingly utilizes an approach where two detections that are based on different assumptions/ operating scenarios, and which have different detection accuracies, interact to improve the overall detection performance. Significantly, the accuracy and performance of the less accurate (but often more important) detection during the power transfer phase can be substantially improved.

Furthermore, the approach allows for an efficient approach where the system may continuously generate suitable parameter sets indicating the transmit and receive powers. The system may simply generate these continuously, or e.g. when extreme or particularly sensitive conditions occur. The decision of whether the individual parameter value set can be used for adapting the parasitic power loss detection or not can be determined subsequently and independently or asynchronously of the actual generation of the parameter value sets. This may allow improved and/or facilitated operation in many embodiments, and may in many embodiments provide better input for the adaptation.

In particular, the possibility of breaking the link between when parameter value sets are generated and when foreign object detection tests are performed may allow improved performance. E.g. in some embodiments, the system may generate a parameter value set whenever the extracted power reaches a new high. However, as this could be due to the power receiver 105 increasing the power extracted or due to a foreign object entering the vicinity of the power transmitter 101, the parameter value set is stored and not directly used for adapting the parasitic power loss detection. However, if a foreign object detection test is performed shortly after and results in a negative outcome, the retriever 219 will extract the stored parameter value set and use it to adapt the parasitic power loss detection. However, if the foreign object test indicates that indeed a foreign object is present, the parameter value set will be discarded and not used to adapt the parasitic power loss detection.

It will be appreciated that in different embodiments, the parameter value sets may contain values for different types of parameters. However, each parameter value set will comprise one or more values which are dependent on/ indicative of the transmit power and the receive power for the power transfer. Thus, a parameter value set comprises information that is dependent on the power provided to the wireless inductive power signal by the power transmitter 101 and the power extracted from the wireless inductive power signal by the power receiver 105.

In many embodiments, each parameter value set may comprise a transmit power estimate and a receive power estimate, e.g. determined as described previously. In some embodiments, the parameter value sets may e.g. comprise only a single value which is indicative of a power loss estimate which reflects a difference between the transmit power and the receive power. As the power loss estimate is dependent on both the transmit power and the receive power it inherently is also indicative of both the transmit power and the receiver power.

The exact adaptation of the parasitic power loss detection performed by the adaptor 213 will differ between different embodiments. However, in many embodiments, the adaptor 213 may be arranged to adapt one of a parameter used in determining the transmit power estimate, the receive power estimate, the parasitic power loss estimate, or the detection threshold. In many embodiments, the adaptor 213 may determine a compensation offset/ factor for the transmit power estimate, the receive power estimate, the parasitic power loss estimate and/or the detection threshold, and the compensation offset/ factor may be included in the parasitic power loss detection algorithm. The determined compensated value may be determined as an absolute value or a relative value (e.g. by modifying a previously determined compensation value).

As a specific example, due to the calibration being performed for values which are considered to be highly likely to represent a scenario where no foreign object is present, the adaptation may be performed based on an assumption that the calculated parasitic power loss estimate should be zero. If the parasitic power loss estimate is different from zero, a compensation offset corresponding to the calculated parasitic power loss estimate may be stored by the adaptor 213 for the power level. The compensation offset may be applied to the transmit power estimate, the receive power estimate, or the parasitic power loss estimate. Alternatively, the parasitic power loss estimate may not be changed but the detection threshold may be increased accordingly.

This may be repeated for a range of power levels resulting in a set of compensation factors being stored for the pairing of this power transmitter 101 and power receiver 105.

In many embodiments, a new compensation factor may be calculated from previous compensation factors, e.g. according to:

$$P_{C,n} = P_{C,n-1} + \alpha \cdot (P_{L,n} - P_{C,n-1})$$

where $P_c$ represents the power compensation value, $P_l$ represents the calculated parasitic power loss estimate for the current adaptation, n is an index representing the adaptation number, and $\alpha$ is a design parameter for controlling the speed of the adaptation (the value of $\alpha$ being between 0 and 1).

The adaptation of the parasitic power loss detection may specifically be such that the algorithm is adapted towards the decision being closer to an expected performance when no foreign object is present. For example, if the parasitic power loss detection is based on comparing a difference between a transmit power and a receive power to given decision thresholds, the adaptation may comprise adapting the determination of the transmit power, the determination of the receiving power and/or the thresholds such that the calculated power difference relative to the thresholds is biased towards an expected relationship corresponding to there being no foreign object present. For example, if the calculated difference is close to a detection threshold indicative of a parasitic power loss being detected, the determination of the transmit power, the receiving power and/or the thresholds may be adapted such that the calculated difference is further from the threshold.

Indeed, in many embodiments, the adaptation may be by an adaptation of the model (e.g. functions/equations) used to determine the parasitic power loss estimate.

The valid time window is typically kept to a relatively short time interval. In many embodiments, a valid time window has a duration not exceeding 30 sec, and in many embodiments not exceeding 30, 15, 10, 5 or even 2 seconds. Such values may be particularly advantageous and may in many embodiments ensure that the risk of a foreign object being positioned proximal to the power transmitter 101 while calibration is being performed is sufficiently low. In many embodiments, the valid time window has a duration not less than 0.5 sec, 1 sec, 2 sec, 5 sec, 10 sec or even 15 seconds. Such values may be particularly advantageous and may in many embodiments provide an appropriate number of receive power estimates from the power receiver.

It will be appreciated that the different functional blocks of Fig. 2 can be performed in different entities, and indeed that they can typically be implemented in the power receiver 105, the power transmitter 101, or externally to both the power receiver 105 and the power transmitter 101; or indeed can be distributed between these locations. It will also be appreciated that various communication of measurements, commands, detection results etc. may be used to support such implementations.

For example, each of the individual connections of FIG. 2 between the driver 201 and respectively the parasitic power loss detector 207, the adaptor 213, the foreign object detector 215, and the parameter processor 209 may be implemented by an internal communication link if the individual entity is part of the power transmitter 101, and by an external communication link (e.g. using the wireless inductive power signal as a communication carrier or using a separate communication approach such as Bluetooth or NFC communication) if the individual entity is part of the power receiver 105 or of a separate device external to both the power receiver 105 and the power transmitter 101.

Similarly, each of the individual connections of FIG. 2 between the power receiver controller 203 and the parasitic power loss detector 207, the adaptor 213, and the parameter processor 209 may be implemented by an internal communication link if the individual entity is part of the power receiver 105, and by an external communication link (e.g. using the wireless inductive power signal as a communication carrier or using a separate communication approach such as Bluetooth or NFC communication) if the individual entity is part of the power transmitter 101 or of a separate device external to both the power receiver 105 and the power transmitter 101.

In many embodiments, the parasitic power loss detector 207, the foreign object detector 215, the time processor 217, the retriever 219, the memory 211 and the parameter processor 209 may be implemented in the power transmitter 101. This typically allows for a lower complexity, and often a safer operation. It may facilitate operation, e.g. by reducing the communication required from the power transmitter 101 to the power receiver 105.

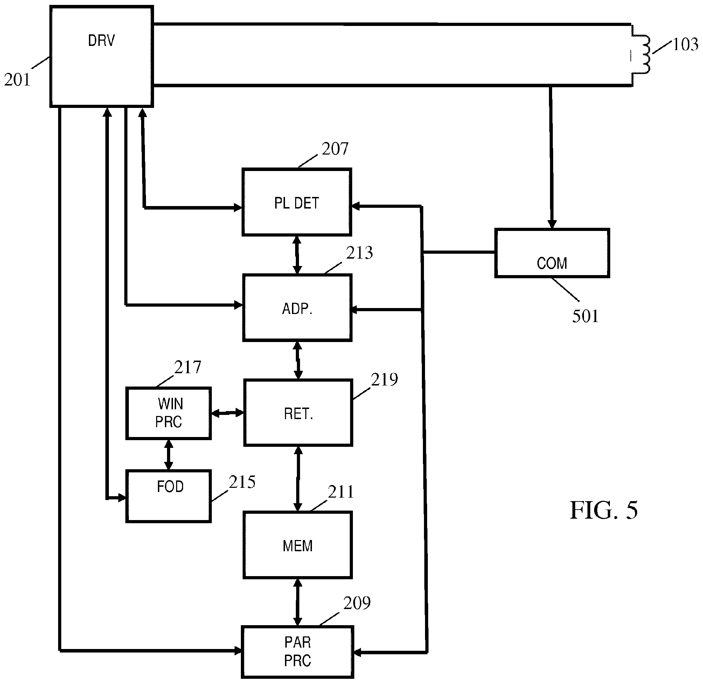

Fig. 5 illustrates and example of a power transmitter 101 in accordance with such an embodiment. Thus, the power transmitter 101 comprises the parasitic power loss detector 207, the foreign object detector 215, the time processor 217, the adaptor 213, the retriever 219, the memory 211, and the parameter processor 209. In addition, Fig. 5 illustrates a power transmitter communicator 501 which can transmit and receive data to and from the power receiver 105.

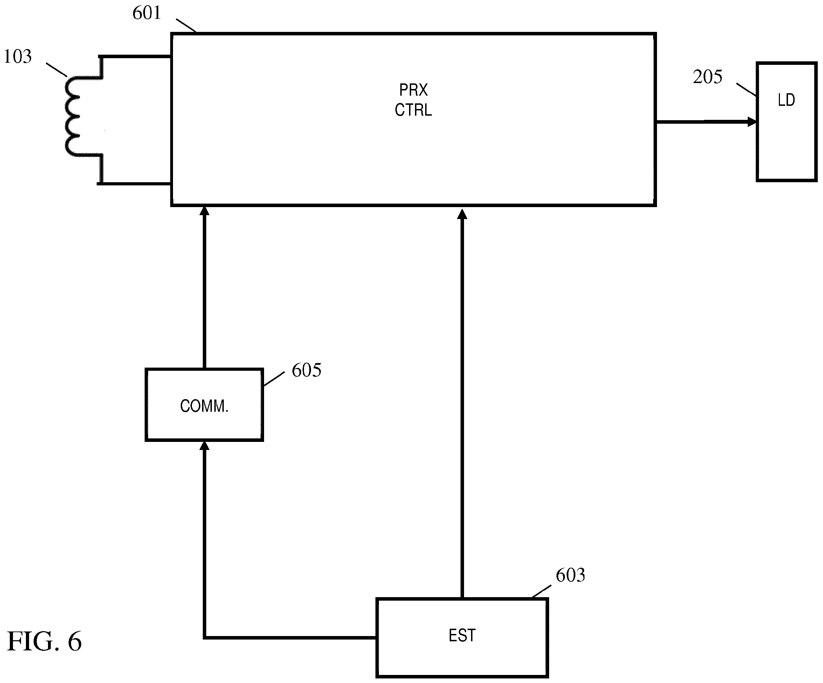

Correspondingly, FIG. 6 illustrates an example of a power receiver 105 in accordance with such an embodiment. The power receiver 105 comprises a power receiver processor 601 which receives and extracts power from the wireless inductive power signal and provides it to the load 205 as will be known to the skilled person. In addition, the power receiver processor 601 comprises the various control functionality required for operating the power receiver 105, e.g. in accordance with the Qi standard (the power receiver processor 601 of Fig. 6 may correspond to the power receiver controller 203 of Fig. 2).

In the example, the power receiver 105 comprises a receive estimate processor 603 which is arranged to generate a receive power estimate for the power extracted from the wireless inductive power signal by the power receiver 105 (typically including estimates of parasitic power extracted e.g. by the induction of eddy currents in conductive parts of the power receiver 105).The power receiver 105 further comprises a power receiver communicator 605 which can transmit data to, and receive data from, the power transmitter 101. Specifically, the power receiver communicator 605 can transmit the receive power estimates to the power transmitter 101.

In this example, the adaptor 213 is accordingly specifically arranged to adapt a parameter (such as an offset to the transmit power estimate, the receive power estimate or the detection threshold) based on receive power estimate indications received from the power receiver 105 for time instants within the valid time window, which typically is considered to correspond to receive power estimate indications received within the valid time window. Thus, the receive power estimates that are received (or generated) within a valid time window are used to adapt the parasitic power loss detection whereas receive power estimates that are received outside of valid time windows are not used to adapt the parasitic power loss detection.

Thus, in the example of FIG. 5, the receive power estimate is not calculated by the power transmitter 101 but rather is generated as a receive power estimate transmitted to the power transmitter 101 from the power receiver 105. Accordingly, the power transmitter 101 may be arranged to receive data messages from the power receiver 105. The data messages may specifically be modulated onto the power signal by load modulation as known from e.g. the Qi Specification. Indeed, the received power values required to be generated by the power receiver 105 and transmitted to the power transmitter 101 may be used directly as the receive power estimates.

In many power transfer systems, such as e.g. the Qi Specification, the power receiver 105 is required to communicate receive power estimates to the power transmitter 101. The received values are indicative of the power that is received by the power receiver 105.

In some embodiments, the power receiver 105 may report a receive power estimate, which corresponds directly to the power that is provided to the load of the power receiver 105. However, in many embodiments, the power receiver 105 will generate a receive power estimate that also includes power loss/ dissipation in the power receiver 105 itself. Thus the reported receive power estimate may include both power provided to the load as well as power loss in the power receiver 105 itself. For example, it may include measured or estimated power loss in the rectification circuits and/or the receiver coil.

In many embodiments, the receive power estimate may be provided directly as a power value. However, it will be appreciated that in other embodiments other indications may be provided, such as a current and/or voltage. For example, in some embodiments, the receive power estimate may be provided as the current or voltage induced in the receive coil 107. In such scenarios, the parasitic power loss detector 207 and/ or the adaptor 213 may calculate the receive power estimate based on the received values.

The parasitic power loss detector 207 may accordingly generate the parasitic power loss estimate based on the received receive power estimate and a locally generated transmit power estimate. The resulting parasitic power loss estimate may then be compared to the detection threshold. If the parasitic power loss estimate exceeds the threshold, a parasitic power loss is considered to be detected.

The time instants for which parameter value sets are generated may be different in different embodiments.

For example, in some embodiments, the parameter processor 209 may be arranged to generate a parameter value set at regular time intervals, such as e.g. every second. In other embodiments, a new parameter value set may be generated and stored whenever a new receive power estimate indication is received from the power receiver 105.

In some embodiments, the parameter processor 209 may advantageously be arranged to generate a parameter value set in response to a detection of an indication of the transmit power for the power transmitter, the receive power for the power receiver, or a power loss estimate indicative of the difference between the transmit power and the receive power exceeds a given threshold.

For example, whenever a new transmit power estimate is generated, it may be compared to a threshold. If this threshold is exceeded, a receive power estimate may be generated and a new parameter value set comprising these two values may be stored in the memory 211. Similarly, in some embodiments, whenever a new receive power estimate is generated (including e.g. being received from the power receiver 105), a transmit power estimate may be generated and the pair of estimates may be stored as a new parameter value set. As another example, whenever a new parasitic power loss estimate is calculated, it may be compared to a threshold and stored as a parameter value set if it exceeds this.

In some embodiments, parameter value sets may be generated and stored only if this criterion is met, i.e. a new parameter value set is only generated if the appropriate power estimate (or one of a set of power estimates) exceeds a threshold.

The approach may result in parameter value sets being generated when it is detected that e.g. an unusual or more extreme scenario occurs. For example, the detection thresholds may be set to correspond to scenarios that are considered to be unusual. In this way, the stored parameter value sets may reflect unusual scenarios which may be likely to reflect scenarios that are particularly likely to result in erroneous performance.

For example, the parameter processor 209 may detect when a parasitic power loss estimate exceeds a threshold. As the parasitic power loss estimate is expected to be relatively close to zero if no foreign object is present, the high parasitic power loss estimate is likely to indicate that the current estimate is not accurate or that a foreign object is indeed present. Accordingly, the threshold being exceeded reflects a scenario which is particularly interesting. If a subsequent foreign object detection (for which a valid time window includes the time for generating the parameter value set) indicates that no foreign object is present, the system proceeds to extract the parameter value set and use this to adapt the parasitic power loss detection, thereby increasing accuracy. However, if the foreign object detection indicates that a foreign object is indeed present, then no adaptation is performed using the generated parameter value set.

In many embodiments, the threshold for when to generate a parameter value set may be dynamically variable.

In many embodiments, the threshold may be determined based on power indications for previously generated parameter value sets. For example, the threshold for a given parameter may be set to correspond to the maximum value for which a parameter value set has previously been generated.

For example, whenever a transmit power estimate is generated, it is compared to a threshold which is set to the maximum transmit power estimate value for the stored parameter value sets. If the generated transmit power estimate exceeds the threshold, the parameter processor 209 generates a parameter value set and stores this. It then updates the threshold to correspond to the current transmit power estimate. Thus, in this approach, a new parameter value set is generated whenever the power transfer reaches an operating point which exceeds the range for which a parameter value set has been generated. Such an approach may allow the adaptation to be extended into new operating ranges.

As another example, an average value of the generated receive power estimates may be maintained by the parameter processor 209. A threshold may then be generated based on this average value, e.g. the threshold may be set to, say, twice the average value. If a receive power estimate is generated above this threshold, the parameter processor 209 proceeds to generate a new parameter value set and store this. In such an approach, data for adapting the parasitic power loss detection may be concentrated on the more extreme operating points, and particularly may be focused on higher load powers.

In some embodiments, the parameter processor 209 may be arranged to generate a parameter value set in response to a detection that a transmit power estimate and a receive power exceeds a range for which a previous adaptation of the parasitic power loss detection has been performed.

E.g. when an adaptation of the parasitic power loss detection is performed, the adaptor 213 may note the range of values of e.g. the transmit power estimates or receive power estimates of the parameter value sets that are used in the adaptation. It may then proceed to keep track of the maximum and minimum value for which an adaptation has been performed. Thus, as part of an adaptation, the adaptor 213 evaluates whether it includes input parameter values above or below input values of previous adaptations. If so, it updates the stored adaptation range to reflect that this has been extended. Following an adaptation, the adaptor 213 feeds the adaptation range to the parameter processor 209.

When a new transmit power estimate or receive power estimate is generated, the parameter processor 209 may compare this to the corresponding adaptation range received from the adaptor 213 in order to detect whether the current values exceed this range. If so, the parameter processor 209 proceeds to generate a parameter value set that includes the new transmit power estimate or receive power estimate. In this way, the system will seek to continuously expand the range for which calibration has been performed by ensuring that any values which exceed the range of previous adaptations are stored in preparation for a potential subsequent adaptation.

It will be appreciated that in some embodiments, the adaptation of the parasitic power loss detection may include dividing the adaptation range into sub-ranges with the adaptor 213 being arranged to adapt the operation within each range separately.

For example, if the adaptation range is being extended based on a new value (e.g. a value outside of the previous adaptation range), the new extended adaptation range can be divided into two sub-ranges: a sub-range reflecting the original range and a sub-range reflecting the extension of the original sub-range. As another example, if an extreme parameter value within the current adaptation range is determined, the original range can be subdivided into two sub-ranges: a first one based e.g. on a previously measured minimum value and the new extreme parameter value and a sub-range based e.g. on a previously measured maximum value and the new extreme parameter value.

In some embodiments, the adaptor 213 may also be arranged to perform a test mode adaptation of the parasitic power loss detection. This test mode adaptation may be performed for more constrained operating values than what may occur during normal operation in the power transfer phase.

Specifically, when the system is operating in a calibration test mode, the loading of the wireless inductive power signal by the power receiver 105 may be constrained relative to the loading when the system is operating in a power transfer mode during a power transfer phase. For example, when in the calibration test mode, the loading by the power receiver 105 may be limited to a reduced range (typically a relatively low power range) or indeed may be limited to a limited set of predetermined values.

In some embodiments, the adaptor 213 may perform a test mode adaptation which is based on test mode parameter value sets (e.g. with the same/ corresponding values being contained in test mode parameter value set as in the parameter value sets determined during power transfer mode operation). The test mode parameter value sets are determined for a plurality of different power receiver test loads, i.e. for a plurality of different loadings of the wireless inductive power signal by the power receiver 105. For each of these different test loads, the parameter processor 209 may generate one or more parameter value sets which includes one or more values indicative of the transmit power and the receive power value for the specific test load test load.

The test mode adaptation may be an initial adaptation and may be performed e.g. as part of the initialization of a power transfer phase. For example, following a configuration phase but prior to the power transfer phase (or e.g. as the initial part of a power transfer phase), the system may enter a test mode wherein the power receiver 105 sequentially applies a plurality of different loads. For each of these, a test mode parameter value set is generated. For example, first the power receiver 105 may disconnect all possible loads resulting in a minimum loading of the wireless inductive power signal. The parameter processor 209 may then proceed to measure and determine a transmit power estimate and may receive a receive power estimate from the power receiver 105. Subsequently, e.g. in response to an indication/ command transmitted from the power transmitter 101, the power receiver 105 may switch-in a predetermined load (e.g. a 5W load). The parameter processor 209 may then proceed to measure and determine a transmit power estimate for this scenario, and may also receive a corresponding receive power estimate from the power receiver 105. In other embodiments, the power receiver 105 may autonomously determine to enter the calibration test mode and e.g. set a predetermined load. In such an example, the initialization of the calibration test mode may be communicated to the power transmitter 101, or the power transmitter 101 may in some embodiments be capable of detecting that the power receiver 105 enters the calibration test mode, e.g. by the power transmitter 101 being arranged to detect that the predetermined load is switched in.

The adaptor 213 may then perform an adaptation of the parasitic power loss detection based on these sets of estimates. For example, an offset and scale factor may be determined such that the calculated parasitic power loss estimate will be zero for both test points (i.e. for both parameter value sets). The system may then proceed to the power transfer phase (or continue the power transfer phase in case the calibration test is performed at the beginning of a power transfer phase).

Such an initial calibration may improve accuracy and may allow the parasitic power loss detection to be relatively accurate already at the start of the power transfer phase. However, the accuracy will typically be relatively limited, and indeed will typically only provide high accuracy for the range for which calibration has been performed.

Therefore, by repeatedly storing parameter value sets and performing adaptations based on these values if subsequent foreign object tests indicate that they are valid (i.e. within a valid time window), the accuracy of the detection may be improved.

In particular, by specifically storing parameter value sets for scenarios outside of the previous adaptation range, the accuracy may be increased to wider calibration ranges. Indeed, when first entering the power transfer phase, the adaptation range may be limited to the range of the (often predetermined) power receiver loads, such as e.g. to the 0 to 5W range. However, if the power receiver 105 increases the loading to higher levels, the parameter processor 209 will detect that the operating range is extending beyond the adaptation range, i.e. the range of the power receiver test loads, and accordingly it will store parameter value sets for these new operating points. The subsequent adaptation (which is conditional on the foreign object detector 215 being negative) accordingly increases the range for which the parasitic power loss detection has been adapted/ calibrated.

Thus, in many embodiments, the system may perform a test mode adaptation as part of the initialization of the power transfer phase and using a set of different power receiver test loads. The range of these test loads is typically smaller, and often much smaller, than an operating range of power receiver loads for the power transfer phase. For example, the test mode may be performed for power receiver loads of e.g. 0, 3W and 5W whereas the full power receiver load range during the power transfer phase may be e.g. 0-15W (or higher).

In some embodiments, the test mode adaptation may thus be based on the adaptor 213 receiving power estimates for different loads of the power receiver 105. In this way, the receive power estimates may provide a plurality of data points that can be used to adapt the parasitic power loss detection for different operation points. Furthermore, the adaptor 213 may in such scenarios be arranged to adapt a plurality of parameters of the parasitic power loss detection in response to the plurality of receive power estimates at different loads.

Specifically, the adaptor 213 may be arranged to adapt both a calibration offset and a calibration scale factor for at least one of a transmitter power estimate, a receive power estimate, a parasitic power loss estimate and the detection threshold in response to the plurality of receive power estimate indications. Thus, specifically, based on a nominal value (e.g. the calculated transmit power estimate, the received receive power estimate, or a nominal detection threshold for a given power level), the adaptation may introduce compensation given as:

$$X_{Comp} = X_{Comp} \cdot \alpha + \beta$$

where X represents the parameter and $\alpha$ represents the calibration scale factor and $\beta$ is the calibration offset.

The adaptor 213 may thus adapt both the offset and the slope resulting in an improved adaptation.

Specifically, the power receiver 105 may during the test mode adaptation communicate one receive power estimate for a low/ light load and one receive power estimate at for a higher load. This may provide improved adaptation and may in particular facilitate the determination of the offset and scale factors.

In this approach, the adaptor 213 is thus provided with (at least) one low (or minimum) load receive power estimate and one higher load receive power estimate. The adaptor 213 may in response proceed to modify the calculation of the transmit power estimate, the receive power estimate, the parasitic power loss estimate, or the detection threshold used in the parasitic power loss detection. For example, it may determine the calibration values $\alpha$ and $\beta$ such that the parasitic power loss estimate for both the high load and the low load is zero.

In the following, a specific example of an approach for adaption/ calibration will be described based on measurements for a light (e.g. minimum) load and a higher load. In this example, the adaptor 213 receives a light load receive power estimate $PRx_{min}$ and a higher load receive power estimate $PRx_{max}$. It further determines the corresponding light load and higher load transmit power estimates $PTx_{min}$ and $PTx_{max}$.

The adaptor 213 then proceeds to determine compensations for the parasitic power loss detection based on the high and low load receive power estimates and transmit power estimates. Two specific examples will be described.

Calibration Method 1 - calibrating the calculation of transmit power estimate.

The power transmitter 101 may calibrate the parasitic power loss estimation by calculating a new modified or calibrated transmit power estimate (P'Tx) from the original estimated transmitted power (PTx) and the received receive power estimates.

The following equation may e.g. by used:

$$P'Tx = \alpha \cdot PTx + \beta$$

where the calibration/ compensation values are determined as:

$$\alpha = (PRx_{max} - PRx_{min}) / (PTx_{max} - PTx_{min})$$

$$\beta = PRx_{min} - \alpha \cdot Ptx_{min} \text{ or } \beta = PRx_{max} - \alpha \cdot PTx_{max}$$

Thus, the $\alpha$ value may provide a scale factor/ proportional adaptation and the $\beta$ value may provide an offset adaptation.

In some embodiments/ scenarios the values $PTx_{min}$ and $PRx_{min}$ will typically be close to zero, and accordingly a simpler proportional adaption may be used:

$$PTx' = PTx \cdot PRx_{max} / PTx_{rmax}$$

Calibration Method 2 - calibrating the calculation of receive power estimate.

The power transmitter 101 may calibrate the parasitic power loss estimation by calculating a new modified or calibrated receive power estimate (P'Rx) from the original estimated receive power (PRx) and the generated transmit power estimates.

The following equation may e.g. by used:

$$P'Rx = \alpha \cdot PRx + \beta$$

where the calibration/ compensation values are determined as:

$$\alpha = (PTx_{max} - PTx_{min}) / (PRx_{max} - PRx_{min})$$

$$\beta = PTx_{min} - \alpha \cdot PRx_{min} \text{ or } \beta = PTx_{max} - \alpha \cdot PRx_{max}$$

Thus, the $\alpha$ value may provide a scale factor/ proportional adaptation and the $\beta$ value may provide an offset adaptation.

In some embodiments/ scenarios the values $PTx_{min}$ and $PRx_{min}$ will typically be close to zero, and accordingly a simpler proportional adaption may be used:

$$PRx' = PRx \cdot PTx_{max} / PRx_{rmax}$$

It will be appreciated that the calibration approach may (as appropriate) also be used for adaptation based on parameter value sets that are determined during the power transfer phase, i.e. for parameter value sets of the valid time windows. More generally, a curve fitting for the transmit power estimate and/or receive power estimate calculation(s) to match the receive and transmit power value pairs of the parameter value sets may be used.

In some embodiments, the above described approach may be used to calibrate the parasitic power loss detection during an initial test mode. Subsequently, during the power transfer phase, the parameter processor 209 may detect a transmit power or receive power that exceeds those of the test mode. It may then generate and store a parameter value set comprising the corresponding transmit power estimate $PTx2_{max}$ and receive power estimate PRx2max.

It may subsequently (if a corresponding foreign object detection test indicates that no foreign object is present) proceed to perform an adaptation based on these values. For example, it may modify the models for calculating the transmit power estimate or receive power estimate according to:

$$P'Tx = a * PTx + b,$$

with

$$a = (PRx2_{max} - PRx_{min}) / (PTx2_{max} - PTx_{min})$$

$$b = PRx_{min} - a * PTx_{min} \text{ or } b = PRx2_{max} - a* PTx2_{max}$$

$$P'Rx = c * PRx + d,$$

with

$$c = (PTx2_{max} - PTx_{min}) / (PRx2_{max} - PRx_{min})$$

$$d = PTx_{min} - c * PRx_{min} \text{ or } d = PTx2_{max} - c* PRx2_{max}$$

As another example, it may divide the model into different ranges, Specifically:
If PTx <= $PRx1_{max}$, the models determined during the test mode adaptation is used. If PTx > $PRx1_{max}$, the following models may be used:

$$P'Tx = a * PTx + b,$$

with

$$a = (PRx2_{max} - PRx1_{max}) / (PTx2_{max} - PTx1_{max})$$

$$b = PRx1_{max} - a * PTx1_{max} \text{ or } b = PRx2_{max} - a* PTx2_{max}$$

$$P'Rx = c * PRx + d,$$

with

$$c = (PTx2_{max} - PTx1_{max}) / (PRx2_{max} - PRx1_{max})$$

$$d = PTx1_{max} - c * PRx1_{max} \text{ or } d = PTx2_{max} - c* PRx2_{max}$$

It will be appreciated that the foreign object detection may be performed at different times in different embodiments. For example, in many embodiments, the foreign object detection may be performed at regular time intervals, such as e.g. with intervals of, say, 1 minute.

In many embodiments, the foreign object detector 215 may for example start a timer when a foreign object detection test has been performed. When the timer expires, the foreign object detector 215 may trigger the performance of a new foreign object detection test.

In some embodiments, this may be performed while continuing the power transfer, i.e. the power transfer phase may be continued unaffected. This may for example be the case where the foreign object detection test corresponds to requesting a user input.

In other embodiments, the power transfer phase may be temporarily suspended. For example, for a short duration, the power receiver 105 may switch the external load out resulting in a low loading of the wireless inductive power signal. The transmit power estimate during this mode of operation may be measured and compared to a threshold. If the threshold is exceeded, the test may be considered to indicate that a foreign object is present.

In many embodiments, the foreign object detector 215 may alternatively or additionally be arranged to trigger a foreign object detection test in response to a detection of an event. The event may specifically be an event indicating that a current operating point is likely to indicate an unusual or extreme situation occurring, and specifically may indicate that there is considered to be an increased probability of an foreign object being present.

Specifically, the foreign object detector 215 may monitor one or more operating parameters and may compare the values for the operating parameter to a given criterion, e.g. the foreign object detector 215 may detect if an operating parameter moves outside of a reference range considered to correspond to nominal operation. The range may in some embodiments be a static predetermined range or may in some embodiments by dynamically changing.

Specifically, the foreign object detector 215 may monitor the transmit power, the receive power and/or the power loss and trigger a foreign object detection test if one of these parameters exceeds a threshold.

Specifically, the foreign object detector 215 may receive the transmit power estimates, receive power estimates, and/or the parasitic power loss estimates and compare them to a threshold. If one of the estimates increases above the threshold, the foreign object detector 215 may trigger a foreign object detection test resulting e.g. in the power transmitter 101 and power receiver 105 entering a test mode to perform the test.

The threshold may in some embodiments be predetermined but in many embodiments, it may reflect the previous operation of the system. Specifically, the threshold may correspond to a previous maximum of the parameter for which a foreign object detection test has been performed.

In some embodiments, the threshold may be dependent on a time parameter. For example, if the transmit power estimate increases by more than a given amount within a given time interval, this could be the result of a quick load change or could be due to a foreign object being brought into the vicinity of the power transmitter 101. Accordingly, a foreign object detection test may be triggered.

In some embodiments, the adaptor 213 may be arranged to perform the adaptation asynchronously with the determination and storing of parameter value sets and/or the performance of foreign object detection tests. For example, adaptation may be formed at periodic time intervals whereas foreign object tests are performed when specific events are detected.

However, in other embodiments, the adaptor 213 may not be uncorrelated to the determination and storing of parameter value sets and/or the performance of foreign object detection tests.

Specifically, in many embodiments, the adaptor 213 may be arranged to trigger an adaptation in response to a foreign object detection test indicating that no foreign object is present. Thus, if the foreign object detector 215 performs a foreign object detection test which determines that there is currently no foreign object present, the result may be fed to the adaptor 213 which may control the time processor 217 to determine a suitable valid time window and the retriever 219 to extract corresponding parameter value sets from the memory 211. It may then proceed to perform the adaptation in response to these parameters.

Such an approach may ensure that the adaptation is performed within a short time interval of the foreign object detection indicating that the change of a foreign object being present is very low. The short time interval may for example have a duration of 1, 2, 3, 5, 10, or 20 seconds. In some embodiments, the adaptor 213 may be arranged to trigger an adaptation in response to detecting that a duration since a foreign object detection test indicating that no foreign object is present exceeds a duration.

It will be appreciated that the above description for clarity has described embodiments of the disclosure with reference to different functional circuits, units and processors. However, it will be apparent that any suitable distribution of functionality between different functional circuits, units or processors may be used. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. An apparatus for a wireless power transfer system including a power receiver (105) for receiving a power transfer from a power transmitter (101) via a wireless inductive power signal;
the apparatus comprising:

a parasitic power loss detector (207) arranged to perform a parasitic power loss detection during a power transfer phase, the parasitic power loss detection being arranged to indicate a positive detection of a parasitic power loss in response to a parasitic power loss estimate exceeding a first threshold, the parasitic power loss being indicative of a difference between a transmit power for the power transmitter (101) and a receive power for the power receiver (105);

a parameter processor (209) arranged to generate parameter value sets for time instants during the power transfer phase, each parameter value set comprising a set of values indicative of the transmit power of the power transmitter and the receive power of the power receiver for the time instant of the parameter value set;

a store (211) for storing the parameter value sets;

a foreign object detector (215) for performing foreign object detection tests, each foreign object detection test estimating whether a foreign object is present or not, the foreign object detector (215) arranged to use a different criterion for detecting a presence of a foreign object than the parasitic power loss detector (207) uses for indicating a positive detection;

a retriever (219) for retrieving a group of parameter value sets from the store (211); and

a first adapter (213) for adapting the parasitic power loss detection in response to the group of parameter value sets,

**characterized in** the apparatus further comprising

a time processor (217) for determining a first time window in response to a foreign object detection test indicating that no foreign object is present, the first time window at least partially preceding the foreign object detection test indicating that no foreign object is present;
and in the retriever being arranged to select parameter value sets for time instants within the first time window for the group of parameter value sets.

2. The apparatus of claim 1 wherein the parameter processor (209) is arranged to generate a parameter value set in response to a detection of a power indication exceeding a second threshold, the power indication being an indication of at least one of:

   the transmit power for the power transmitter (101);
   the receive power for the power receiver (105); and
   a power loss estimate indicative of the difference between the transmit power and the receive power.

3. The apparatus of claim 2 wherein the parameter processor (209) is arranged to determine the second threshold in response to a power indication for a previously generated parameter value set.

4. The apparatus of claim 1 wherein the parameter processor (209) is arranged to generate a parameter value set in response to a detection that at least one of a transmit power estimate for the transmit power and a receive power estimate for the receive power exceeds a range for which a previous adaptation of the parasitic power loss detection has been performed.

5. The apparatus of claim 1, 2 or 4 wherein the first adaptor (213) is further arranged to perform a test mode adaptation of the parasitic power loss detection, the test mode adaptation being in response to test mode parameter value sets for a plurality of different power receiver test loads, each test mode parameter value set comprising a set of values indicative of the transmit power and the receive power value for one power receiver test load.

6. The apparatus of claim 5 wherein the plurality of different power receiver test loads are comprised in a range which is smaller than an operating range of power receiver loads for the power transfer phase.

7. The apparatus of claim 6 wherein the parameter processor (209) is arranged to generate a parameter value set in response to a detection of a receive power estimate for the receive power exceeding a range corresponding to the range of different power receiver test loads.

8. The apparatus of claim 5 wherein the first adaptor (213) is arranged to perform the test mode adaptation as part of an initialization of a power transfer phase.

9. The apparatus of claim 1 wherein the foreign object detector (215) is arranged to trigger a foreign object detection test in response to a detection of a power indication exceeding a second threshold, the power indication being an indication of at least one of:

   the transmit power for the power transmitter;
   the receive power for the power receiver; and
   a power loss estimate indicative of the difference between the transmit power and the receive power.

10. The apparatus of claim 1 wherein the foreign object detector (215) is arranged to trigger a foreign object detection test in response to a detection of a power transfer operating parameter being outside a reference range.

11. The apparatus of claim 1 wherein the first adapter (213) is arranged to trigger the adaptation in response to a foreign object detection test indicating that no foreign object is present.

12. A wireless power transmitter comprising the apparatus of claim 1.

13. A wireless power receiver comprising the apparatus of claim 1.

14. A wireless power transfer system comprising the apparatus of claim 1.

15. A method of operation for an apparatus for a wireless power transfer system including a power receiver (105) for receiving a power transfer from a power transmitter (101) via a wireless inductive power signal;

the method comprising:

performing a parasitic power loss detection during a power transfer phase, the parasitic power loss detection being arranged to indicate a positive detection of a parasitic power loss in response to a parasitic power loss estimate exceeding a first threshold, the parasitic power loss being indicative of a difference between a transmit power for the power transmitter and a receive power for the power receiver;
generating parameter value sets for time instants during the power transfer phase, each parameter value set comprising a set of values indicative of the transmit power of the power transmitter and the receive power of the power receiver for the time instant of the parameter value set;
storing the parameter value sets in a store (211);
performing foreign object detection tests, each foreign object detection test estimating whether a foreign object is present or not, the foreign object detection tests using a different criterion for detecting a presence of a foreign object than the parasitic power loss detection uses for indicating a positive detection;
determining a first time window in response to a foreign object detection test indicating that no foreign object is present, the first time window at least partially preceding the foreign object detection test indicating that no foreign object is present;
retrieving a group of parameter value sets from the store, the retriever being arranged to select parameter value sets for time instants within the first time window for the group of parameter value sets; and
adapting the parasitic power loss detection in response to the group of parameter value sets.

**Patentansprüche**

1. Gerät für ein drahtloses Leistungsübertragungssystem mit einem Leistungsempfänger (105) zum Empfangen einer Leistungsübertragung von einem Leistungssender (101) über ein drahtloses induktives Leistungssignal;
wobei das Gerät Folgendes umfasst:

einen parasitären Leistungsverlustdetektor (207), der dafür eingerichtet ist, eine Erkennung von parasitären Leistungsverlusten während einer Leistungsübertragungsphase durchzuführen, wobei die Erkennung von parasitären Leistungsverlusten dafür vorgesehen ist, eine positive Erkennung eines parasitären Leistungsverlusts in Reaktion darauf anzuzeigen, dass ein parasitärer Leistungsverlustschätzwert einen ersten Schwellenwert überschreitet, wobei der parasitäre Leistungsverlust auf eine Differenz zwischen einer Sendeleistung für den Leistungssender (101) und einer Empfangsleistung für den Leistungsempfänger (105) hinweist;
einen Parameterprozessor (209), der dafür eingerichtet ist, Parameterwertesätze für Zeitpunkte während der Leistungsübertragungsphase zu erzeugen, wobei jeder Parameterwertesatz einen Satz von Werten umfasst, die die Sendeleistung des Leistungssenders und die Empfangsleistung des Leistungsempfängers für den Zeitpunkt des Parameterwertesatzes angeben;
einen Speicher (211) zum Speichern der Parameterwertesätze;
einen Fremdkörperdetektor (215) zum Durchführen von Fremdkörpererkennungstests, wobei jeder Fremdkörpererkennungstest schätzt, ob ein Fremdkörper vorhanden ist oder nicht, wobei der Fremdkörperdetektor (215) vorgesehen ist, um ein anderes Kriterium zum Erkennen des Vorhandenseins eines Fremdkörpers zu verwenden als der parasitäre Leistungsverlustdetektor (207) zum Angeben einer positiven Erkennung verwendet;
eine Abrufeinheit (219) zum Abrufen einer Gruppe von Parameterwertesätzen aus dem Speicher (211); und
einen ersten Adapter (213) zum Anpassen der Erkennung von parasitären Leistungsverlusten in Reaktion auf die Gruppe von Parameterwertesätzen,

**dadurch gekennzeichnet, dass** das Gerät ferner Folgendes umfasst:
einen Zeitprozessor (217) zum Bestimmen eines ersten Zeitfensters in Reaktion darauf, dass ein Fremdkörpererkennungstest angibt, dass kein Fremdkörper vorhanden ist, wobei das erste Zeitfenster dem Fremdkörpererkennungstest, der angibt, dass kein Fremdkörper vorhanden ist, zumindest teilweise vorangeht;
und dadurch, dass die Abrufeinheit dafür eingerichtet ist, Parameterwertesätze für Zeitpunkte innerhalb des ersten Zeitfensters für die Gruppe von Parameterwertesätzen auszuwählen.

2. Gerät nach Anspruch 1, wobei der Parameterprozessor (209) dafür eingerichtet ist, einen Parameterwertesatz zu erzeugen, wenn eine Leistungsangabe erkannt wird, die einen zweiten Schwellenwert überschreitet, wobei die Leistungsangabe eine Angabe von mindestens einem von Folgendem ist:

der Sendeleistung für den Leistungssender (101);

der Empfangsleistung für den Leistungsempfänger (105); und
eines Leistungsverlustschätzwerts, der die Differenz zwischen der Sendeleistung und der Empfangsleistung angibt.

3.  Gerät nach Anspruch 2, wobei der Parameterprozessor (209) dafür eingerichtet ist, den zweiten Schwellenwert in Reaktion auf eine Leistungsangabe für einen zuvor erzeugten Parameterwertesatz zu bestimmen.

4.  Gerät nach Anspruch 1, wobei der Parameterprozessor (209) dafür eingerichtet ist, einen Parameterwertesatz zu erzeugen, wenn erkannt wird, dass mindestens einer von einem Sendeleistungsschätzwert für die Sendeleistung und einem Empfangsleistungsschätzwert für die Empfangsleistung einen Bereich überschreitet, für den eine vorherige Anpassung der Erkennung von parasitären Leistungsverlusten durchgeführt wurde.

5.  Gerät nach Anspruch 1, 2 oder 4, wobei der erste Adapter (213) ferner dafür eingerichtet ist, eine Testmodusanpassung der Erkennung von parasitären Leistungsverlusten durchzuführen, wobei die Testmodusanpassung in Reaktion auf Testmodus-Parameterwertesätze für eine Vielzahl von unterschiedlichen Leistungsempfänger-Testlasten erfolgt, wobei jeder Testmodus-Parameterwertesatz einen Satz von Werten umfasst, die den Sendeleistungs- und den Empfangsleistungswert für eine Leistungsempfänger-Testlast angeben.

6.  Gerät nach Anspruch 5, wobei die Vielzahl von unterschiedlichen Leistungsempfänger-Testlasten in einem Bereich enthalten ist, der kleiner ist als ein Betriebsbereich von Leistungsempfängerlasten für die Leistungsübertragungsphase.

7.  Gerät nach Anspruch 6, wobei der Parameterprozessor (209) dafür eingerichtet ist, einen Parameterwertesatz zu erzeugen, wenn erkannt wird, dass ein Empfangsleistungsschätzwert für die Empfangsleistung einen Bereich überschreitet, der dem Bereich von unterschiedlichen Leistungsempfänger-Testlasten entspricht.

8.  Gerät nach Anspruch 5, wobei der erste Adapter (213) dafür eingerichtet ist, die Testmodusanpassung als Teil einer Initialisierung einer Leistungsübertragungsphase durchzuführen.

9.  Gerät nach Anspruch 9, wobei der Fremdkörperdetektor (215) dafür eingerichtet ist, einen Fremdkörpererkennungstest auszulösen, wenn erkannt wird, dass eine Leistungsangabe einen zweiten Schwellenwert überschreitet, wobei die Leistungsangabe eine Angabe von mindestens einem von Folgendem ist:

      der Sendeleistung für den Leistungssender;
      der Empfangsleistung für den Leistungsempfänger; und
      eines Leistungsverlustschätzwerts, der die Differenz zwischen der Sendeleistung und der Empfangsleistung angibt.

10. Gerät nach Anspruch 1, wobei der Fremdkörperdetektor (215) dafür eingerichtet ist, einen Fremdkörpererkennungstest auszulösen, wenn erkannt wird, dass ein Leistungsübertragungsbetriebsparameter außerhalb eines Referenzbereichs liegt.

11. Gerät nach Anspruch 1, wobei der erste Adapter (213) dafür eingerichtet ist, die Anpassung auszulösen, wenn ein Fremdkörpererkennungstest angibt, dass kein Fremdkörper vorhanden ist.

12. Drahtloser Leistungssender, der das Gerät nach Anspruch 1 umfasst.

13. Drahtloser Leistungsempfänger, der das Gerät nach Anspruch 1 umfasst.

14. Drahtloses Leistungsübertragungssystem, das das Gerät nach Anspruch 1 umfasst.

15. Verfahren zum Betrieb eines Geräts für ein drahtloses Leistungsübertragungssystem mit einem Leistungsempfänger (105) zum Empfangen einer Leistungsübertragung von einem Leistungssender (101) über ein drahtloses induktives Leistungssignal; wobei das Verfahren Folgendes umfasst:

      Durchführen einer Erkennung von parasitären Leistungsverlusten während einer Leistungsübertragungsphase, wobei die Erkennung von parasitären Leistungsverlusten dafür vorgesehen ist, eine positive Erkennung eines parasitären Leistungsverlusts in Reaktion darauf anzuzeigen, dass ein parasitärer Leistungsverlustschätzwert einen ersten Schwellenwert überschreitet, wobei der parasitäre Leistungsverlust auf eine Differenz zwischen einer Sendeleistung für den Leistungssender und einer Empfangsleistung für den Leistungsempfänger hinweist; Erzeugen von Parameterwertesätzen für Zeitpunkte während der Leistungsübertragungsphase, wobei jeder Parameterwertesatz einen Satz von Werten umfasst, die die Sendeleistung des Leistungssenders und die Empfangsleistung des Leistungsempfängers für den Zeitpunkt des Parameterwertesatzes angeben; Speichern der Parameterwertesätze in einem Speicher (211); Durchführen von Fremdkörpererkennungstests, wobei jeder Fremdkörpererkennungstest schätzt, ob ein Fremdkörper vorhanden ist oder nicht, wobei die Fremdkörpererkennungstests ein anderes Kriterium zum Erkennen des Vorhandenseins eines Fremdkörpers verwenden als die Erkennung der parasitären Leistungsverluste zum Angeben einer positiven Erkennung verwendet;

Bestimmen eines ersten Zeitfensters in Reaktion darauf, dass ein Fremdkörpererkennungstest angibt, dass kein Fremdkörper vorhanden ist, wobei das erste Zeitfenster dem Fremdkörpererkennungstest, der angibt, dass kein Fremdkörper vorhanden ist, zumindest teilweise vorangeht;

Abrufen einer Gruppe von Parameterwertesätzen aus dem Speicher, wobei die Abrufeinheit dafür eingerichtet ist, Parameterwertesätze für Zeitpunkte innerhalb des ersten Zeitfensters für die Gruppe von Parameterwertesätzen auszuwählen; und

Anpassen der Erkennung von parasitären Leistungsverlusten in Reaktion auf die Gruppe von Parameterwertesätzen.

## Revendications

1. Appareil pour un système de transfert d'énergie sans fil incluant un récepteur d'énergie (105) pour recevoir un transfert d'énergie en provenance d'un émetteur d'énergie (101) via un signal d'énergie inductive sans fil ; l'appareil comprenant :

   un détecteur de perte d'énergie parasite (207) agencé pour effectuer une détection de perte d'énergie parasite pendant une phase de transfert d'énergie, la détection de perte d'énergie parasite étant agencée pour indiquer une détection positive d'une perte d'énergie parasite en réponse à une évaluation de perte d'énergie parasite dépassant un premier seuil, la perte d'énergie parasite étant indicative d'une différence entre une énergie d'émission pour l'émetteur d'énergie (101) et une énergie de réception pour le récepteur d'énergie (105) ; un processeur de paramètre (209) agencé pour produire des ensembles de valeurs de paramètre pendant des instants temporels pendant la phase de transfert d'énergie, chaque ensemble de valeurs de paramètre comprenant un ensemble de valeurs indicatives de l'énergie d'émission de l'émetteur d'énergie et de l'énergie de réception du récepteur d'énergie pendant l'instant temporel de l'ensemble de valeurs de paramètre ; une mémoire (211) pour stocker les ensembles de valeurs de paramètre ; un détecteur d'objet étranger (215) pour effectuer des tests de détection d'objet étranger, chaque test de détection d'objet étranger évaluant si un objet étranger est présent ou pas, le détecteur d'objet étranger (215) étant agencé pour utiliser un critère différent pour détecter une présence d'un objet étranger que celui que le détecteur de perte d'énergie parasite (207) utilise pour indiquer une détection positive ; un dispositif de recherche (219) pour rechercher un groupe d'ensembles de valeurs de paramètre à partir de la mémoire (211) ; et un premier adaptateur (213) pour adapter la détection de perte d'énergie parasite en réponse au groupe d'ensembles de valeurs de paramètre, **caractérisé en ce que** l'appareil comprend en outre un processeur de temps (217) pour déterminer une première fenêtre temporelle en réponse à un test de détection d'objet étranger indiquant qu'aucun objet étranger n'est présent, la première fenêtre temporelle précédant au moins partiellement le test de détection d'objet étranger indiquant qu'aucun objet étranger n'est présent ; et **en ce que** le dispositif de recherche est agencé pour sélectionner des ensembles de valeurs de paramètre pendant des instants temporels à l'intérieur de la première fenêtre temporelle pour le groupe d'ensembles de valeurs de paramètre.

2. Appareil selon la revendication 1, dans lequel le processeur de paramètre (209) est agencé pour produire un ensemble de valeurs de paramètre en réponse à une détection d'une indication d'énergie dépassant un second seuil, l'indication d'énergie étant une indication d'au moins une de :

   l'énergie d'émission pour l'émetteur d'énergie (101) ; l'énergie de réception pour le récepteur d'énergie (105) ; et

une évaluation de perte d'énergie indicative de la différence entre l'énergie d'émission et l'énergie de réception.

3. Appareil selon la revendication 2, dans lequel le processeur de paramètre (209) est agencé pour déterminer le second seuil en réponse à une indication d'énergie pour un ensemble de valeurs de paramètre précédemment produit.

4. Appareil selon la revendication 1, dans lequel le processeur de paramètre (209) est agencé pour produire un ensemble de valeurs de paramètre en réponse à une détection qu'au moins une d'une évaluation d'énergie d'émission pour l'énergie d'émission et d'une évaluation d'énergie de réception pour l'énergie de réception dépasse une plage pour laquelle une adaptation précédente de la détection de perte d'énergie parasite a été effectuée.

5. Appareil selon la revendication 1, 2 ou 4, dans lequel le premier adaptateur (213) est en outre agencé pour effectuer une adaptation de mode de test de la détection de perte d'énergie parasite, l'adaptation de mode de test étant en réponse à des ensembles de valeurs de paramètre de mode de test pour une pluralité de charges de test de récepteur d'énergie différentes, chaque ensemble de valeurs de paramètre de mode de test comprenant un ensemble de valeurs indicatives de l'énergie d'émission et la valeur d'énergie de réception pour une charge de test de récepteur d'énergie particulière.

6. Appareil selon la revendication 5, dans lequel la pluralité de différentes charges de test de récepteur d'énergie est comprise dans une plage qui est plus petite qu'une plage de fonctionnement de charges de récepteur d'énergie pendant la phase de transfert d'énergie.

7. Appareil selon la revendication 6, dans lequel le processeur de paramètre (209) est agencé pour produire un ensemble de valeurs de paramètre en réponse à une détection d'une évaluation d'énergie de réception pour l'énergie de réception dépassant une plage correspondant à la plage de différentes charges de test de récepteur d'énergie.

8. Appareil selon la revendication 5, dans lequel le premier adaptateur (213) est agencé pour effectuer l'adaptation de mode de test en tant que partie d'une initialisation d'une phase de transfert d'énergie.

9. Appareil selon la revendication 1, dans lequel le détecteur d'objet étranger (215) est agencé pour déclencher un test de détection d'objet étranger en réponse à une détection d'une indication d'énergie dépassant un second seuil, l'indication d'énergie étant une indication d'au moins une de :

l'énergie d'émission pour l'émetteur d'énergie ;
l'énergie de réception pour le récepteur d'énergie ; et
une évaluation de perte d'énergie indicative de la différence entre l'énergie d'émission et l'énergie de réception.

10. Appareil selon la revendication 1, dans lequel le détecteur d'objet étranger (215) est agencé pour déclencher un test de détection d'objet étranger en réponse à une détection d'un paramètre de fonctionnement de transfert d'énergie étant à l'extérieur d'une plage de référence.

11. Appareil selon la revendication 1, dans lequel le premier adaptateur (213) est agencé pour déclencher l'adaptation en réponse à un test de détection d'objet étranger indiquant qu'aucun objet étranger n'est présent.

12. Émetteur d'énergie sans fil comprenant l'appareil selon la revendication 1.

13. Récepteur d'énergie sans fil comprenant l'appareil selon la revendication 1.

14. Système de transfert d'énergie sans fil comprenant l'appareil selon la revendication 1.

15. Procédé de fonctionnement pour un appareil pour un système de transfert d'énergie sans fil incluant un récepteur d'énergie (105) pour recevoir un transfert d'énergie en provenance d'un émetteur d'énergie (101) via un signal d'énergie inductive sans fil ;
le procédé comprenant :

l'exécution d'une détection de perte d'énergie parasite pendant une phase de transfert d'énergie, la détection de perte d'énergie parasite étant agencée pour indiquer une détection positive d'une perte d'énergie parasite en réponse à une évaluation de perte d'énergie parasite dépassant un premier seuil, la perte d'énergie parasite étant indicative d'une différence entre une énergie d'émission pour l'émetteur d'énergie et une énergie de réception pour le récepteur d'énergie ;

la production d'ensembles de valeurs de paramètre pour des instants temporels pendant la phase de transfert d'énergie, chaque ensemble de valeurs de paramètre comprenant un ensemble de valeurs indicatives de l'énergie d'émission de l'émetteur d'énergie et de l'énergie de réception du récepteur d'énergie pour l'instant temporel de l'ensemble de valeurs de paramètre ;

le stockage des ensembles de valeurs de paramètre dans une mémoire (211) ;

l'exécution de tests de détection d'objet étranger, chaque test de détection d'objet étranger évaluant si un objet étranger est présent ou pas, les tests de détection d'objet étranger utilisant un critère différent pour détecter une présence d'un objet étranger de celui que la détection de perte d'énergie parasite utilise pour indiquer une détection positive ;

la détermination d'une première fenêtre temporelle en réponse à un test de détection d'objet étranger indiquant qu'aucun objet étranger n'est présent, la première fenêtre temporelle précédant au moins partiellement le test de détection d'objet étranger indiquant qu'aucun objet étranger n'est présent ;

la recherche d'un groupe d'ensembles de valeurs de paramètre à partir de la mémoire, le dispositif de recherche étant agencé pour sélectionner des ensembles de valeurs de paramètre pour des instants temporels à l'intérieur de la première fenêtre temporelle pour le groupe d'ensembles de valeurs de paramètre ; et

l'adaptation de la détection de perte d'énergie parasite en réponse au groupe d'ensembles de valeurs de paramètre.

FIG. 1

FIG. 2

FIG. 3

V

S1

S2

Out

EP 3 231 056 B1

FIG. 4

FIG. 5

FIG. 6

**EP 3 231 056 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014060871 A1